# EUROPÄISCHE PATENTSCHRIFT

(11) **EP 3 338 130 B1**
(45) Veröffentlichungstag und Bekanntmachung des Hinweises auf die Patenterteilung: **20.04.2022**
(21) Anmeldenummer: 16757206.4
(22) Anmeldetag: 18.08.2016
(51) Int. Cl.: G02B 13/00, G02B 27/10, H04N 5/225, H04N 5/232, G02B 26/08, G02B 7/08, G02B 27/64

(54) **MULTIAPERTURABBILDUNGSVORRICHTUNG, VERFAHREN ZUM HERSTELLEN DERSELBEN UND ABBILDUNGSSYSTEM**
MULTI-APERTURE IMAGING DEVICE, METHOD FOR PRODUCING SAME, AND IMAGING SYSTEM
DISPOSITIF IMAGEUR MULTI-OUVERTURES, SON PROCÉDÉ DE FABRICATION ET SYSTÈME IMAGEUR

(30) Priorität: 19.08.2015 DE 102015215837
(43) Veröffentlichungstag der Anmeldung: 27.06.2018
(73) Patentinhaber: Fraunhofer-Gesellschaft zur Förderung der angewandten Forschung e.V., 80686 München (DE)
(72) Erfinder: WIPPERMANN, Frank, 98617 Meiningen (DE); BRÜCKNER, Andreas, 07743 Jena (DE); BRÄUER, Andreas, 07646 Schlöben (DE); OBERDÖRSTER, Alexander, 07749 Jena (DE)
(74) Vertreter: König, Andreas Rudolf
(86) Internationale Anmeldenummer: PCT/EP2016/069645
(87) Internationale Veröffentlichungsnummer: WO 2017/029376

(56) Entgegenhaltungen:
- WO-A1-2015/019772
- WO-A2-2015/015383
- DE-B3-102014 213 371
- US-A1- 2009 122 406
- US-A1- 2014 111 650
- US-A1- 2014 340 536
- US-A1- 2015 077 623
- US-A1- 2015 109 468
- US-A1- 2015 201 128
- US-B1- 9 083 873

## Beschreibung

Die vorliegende Erfindung bezieht sich auf eine Multiaperturabbildungsvorrichtung und auf ein Verfahren zum Herstellen derselben. Die vorliegende Erfindung bezieht sich ferner auf eine Abbildungsvorrichtung und auf eine Anordnung von Komponenten für die Erzeugung von Bewegungen und Multiaperturabbildungssystemen.

Konventionelle Kameras besitzen einen Abbildungskanal, der das gesamte Objektfeld abbildet. Die Kameras besitzen adaptive Komponenten, die eine Anpassung des Abbildungssystems ermöglichen und dabei Herstellungstoleranzen und den Einsatztemperaturbereich erweitern bzw. Autofokus- sowie optische Bildstabilisierungsfunktionen ermöglichen. Komponenten für die Erzeugung von Bewegungen zur Realisierung von Fokussierungs- und optischer Bildstabilisierungsfunktionen sind derart angeordnet, dass sie die optische Achse bzw. das Objektiv in Richtungen umschließen, jedoch ohne den Abbildungsstrahlengang zu blockieren. Kameras und/oder Multiaperturabbildungsvorrichtungen weisen einen Miniaturisierungsbedarf auf.

Wünschenswert wäre demnach ein Konzept, das miniaturisierte Multiaperturabbildungsvorrichtungen zum Erfassen eines Gesamtgesichtsfelds unter Gewährleistung einer hohen Bildqualität ermöglicht.

Die Aufgabe der vorliegenden Erfindung besteht deshalb darin, eine Multiaperturabbildungsvorrichtung, ein Verfahren zum Herstellen derselben und ein Abbildungssystem zu schaffen, die eine miniaturisierte Ausführung der Multiaperturabbildungsvorrichtung und/oder des Abbildungssystems und ein Erhalten von Bildern in einer hohen Qualität ermöglichen.

Diese Aufgabe wird durch den Gegenstand der unabhängigen Patentansprüche gelöst.

Ein Kerngedanke der vorliegenden Erfindung besteht darin, erkannt zu haben, dass basierend auf einer Relativbewegung zwischen einem einzeiligen Array, dem Bildsensor und der Strahlumlenkeinrichtung ein Fokus und/oder eine optische Bildstabilisierung erhalten werden kann, die eine hohe Bildqualität ermöglichen. Eine Anordnung der Aktoreinrichtung in der Ebene des Quaders, der von einer Position des Bildsensors, der Strahlumlenkeinrichtung und dem einzeiligen Array aufgespannt wird, ermöglicht einen geringen Bauraumbedarf entlang einer Richtung senkrecht zu dieser Ebene basierend auf der Abwesenheit der Aktoreinrichtung entlang dieser Richtung. Die Multiaperturabbildungsvorrichtung weist eine Dickenrichtung aufweist, die normal zu den zwei Ebenen angeordnet ist, wobei die Aktoreinrichtung eine Abmessung parallel zu der Dickenrichtung aufweist und ein Anteil von höchstens 10 % der Abmessung ausgehend von einem Bereich zwischen den zwei Ebenen über die zwei Ebenen hinausragt. Die Aktoreinrichtung umfasst einen piezoelektrischen Aktor, der mit dem Bildsensor oder dem Array gekoppelt ist; wobei der Bildsensor oder die Strahlumlenkeinrichtung zwischen dem piezoelektrischen Aktor der Aktoreinrichtung und dem einzeiligen Array angeordnet ist, wobei der piezoelektrische Aktor ausgebildet ist, um einen Abstand zwischen dem Bildsensor und dem einzeiligen Array zu verändern und um sich bei einer Aktuierung entlang einer Strahlrichtung parallel zu einem Strahlengang durch die optischen Kanäle zu verformen. Der piezoelektrische Aktor ist über eine mechanische Umlenkeinrichtung mit dem Bildsensor oder dem Array verbunden ist. Die mechanische Umlenkeinrichtung ist zwischen den Ebenen angeordnet.

Die mechanische Umlenkeinrichtung oder das einzeilige Array oder der Bildsensor ist über eine Lagerung gelagert, die ausgebildet ist, um Bewegungsfreiheitsgrade des einzeiligen Arrays oder des Bildsensors bewirkt durch eine Auslenkung des Aktors auf eine Richtung parallel oder antiparallel zu der Strahlrichtung zu beschränken. Der piezoelektrische Aktor ist als piezoelektrischer Biegeaktor gebildet.

Gemäß einem Ausführungsbeispiel umfasst eine Multiaperturabbildungsvorrichtung einen Bildsensor, ein einzeiliges Array von nebeneinander angeordneten optischen Kanälen, wobei jeder optische Kanal eine Optik zur Abbildung eines Teilbereichs eines Objektbereichs auf einen Bildsensorbereich des Bildsensors umfasst, eine Strahlumlenkeinrichtung zum Umlenken eines Strahlengangs der optischen Kanäle und eine Aktoreinrichtung zum Erzeugen einer Relativbewegung zwischen dem Bildsensor, dem einzeiligen Array und der Strahlumlenkeinrichtung. Die Aktoreinrichtung ist so angeordnet, dass sie zumindest teilweise zwischen zwei Ebenen angeordnet ist, die durch Seiten eines Quaders aufgespannt werden, wobei die Seiten des Quaders zueinander sowie zu einer Zeilenerstreckungsrichtung des einzeiligen Arrays und eines Teils des Strahlengangs der optischen Kanäle zwischen dem Bildsensor und der Strahlumlenkeinrichtung parallel ausgerichtet sind und dessen Volumen minimal ist und dennoch den Bildsensor, das einzeilige Array und die Strahlumlenkeinrichtung umfasst.

Gemäß einem weiteren Ausführungsbeispiel umfasst ein Abbildungssystem eine erste Multiaperturabbildungsvorrichtung und zumindest eine zweite Multiaperturabbildungsvorrichtung und ist ausgebildet, um einen Objektbereich zumindest stereoskopisch zu erfassen.

Gemäß einem weiteren Ausführungsbeispiel umfasst ein Verfahren zum Herstellen einer Multiaperturabbildungsvorrichtung ein Bereitstellen eines Bildsensors, ein Anordnen eines einzeiligen Arrays von nebeneinander angeordneten optischen Kanälen, so dass jeder optische Kanal eine Optik zur Abbildung eines Teilbereichs eines Objektbereichs auf einen Bildsensorbereich des Bildsensors umfasst. Das Verfahren umfasst ein Anordnen einer Strahlumlenkeinrichtung zum Umlenken eines Strahlengangs der optischen Kanäle und ein Anordnen einer Aktoreinrichtung zum Erzeugen einer Relativbewegung zwischen dem Bildsensor, dem einzeiligen Array und der Strahlumlenkeinrichtung. Die Aktoreinrichtung wird so angeordnet, dass sie zumindest teilweise zwischen zwei Ebenen angeordnet ist, die durch Seiten eines Quaders aufgespannt werden, wobei die Seiten des Quaders zueinander sowie zu einer Zeilenerstreckungsrichtung des einzeiligen Arrays und eines Teils des Strahlengangs der optischen Kanäle zwischen dem Bildsensor und der Strahlumlenkeinrichtung parallel ausgerichtet sind und dessen Volumen minimal ist und dennoch den Bildsensor, das einzeilige Array und die Strahlumlenkeinrichtung umfasst.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: eine schematische perspektivische Ansicht einer Multiaperturabbildungsvorrichtung gemäß einem Beispiel;
- Fig. 2: eine schematische Seitenschnittansicht der Multiaperturabbildungsvorrichtung aus Fig. 1;
- Fig. 3: eine schematische Aufsicht auf die Multiaperturabbildungsvorrichtung aus Fig. 1 zur Verdeutlichung der Anordnung von Komponenten;
- Fig. 4: eine schematische perspektivische Ansicht einer weiteren Multiaperturabbildungsvorrichtung gemäß einem Beispiel;
- Fig. 5: eine schematische Aufsicht auf einen Bildsensor und ein einzeiliges Array gemäß einem nicht unter die Ansprüche fallenden Beispiel, wobei das einzeilige Array mit zwei Aktoren, die als Tauchspulenmotoren ausgeführt sind, verbunden ist und wobei eine Änderung eines Abstands zwischen Bildsensor und Array für eine Fokusfunktion ermöglicht ist;
- Fig. 6a-h: schematische Ansichten von Antriebskonzepten zur Bewegung des einzeiligen Arrays oder der Strahlumlenkeinrichtung gemäß Z nicht unter die Ansprüche fallenden Beispielen;
- Fig. 7: eine schematische Aufsicht auf den Bildsensor, das einzeilige Array und die Strahlumlenkeinrichtung, bei denen eine Funktionsweise von Aktoren aus den Fig. 5 und 6a-h kombiniert ist gemäß einem nicht unter die Ansprüche fallenden Beispiel;
- Fig. 8a: eine schematische Aufsicht auf den Bildsensor und das einzeilige Array, das basierend auf einem piezoelektrischen Aktor translatorisch bewegt wird und wobei eine Änderung eines Abstands zwischen Bildsensor und Array für eine Fokusfunktion ermöglicht ist;
- Fig. 8b: eine schematische Seitenansicht des Bildsensors und des einzeiligen Arrays aus Fig. 8a;
- Fig. 9a: eine schematische Aufsicht auf den Bildsensor und das einzeilige Array gemäß einem Ausführungsbeispiel, wobei das einzeilige Array verglichen mit der Fig. 8a mit zwei piezoelektrischen Aktoren verbunden ist und wobei eine Änderung eines Abstands zwischen Bildsensor und Array für eine Fokusfunktion ermöglicht ist;
- Fig. 9b: eine schematische Seitenansicht des Bildsensors und des einzeiligen Arrays aus Fig. 9a;
- Fig. 10a: eine schematische Aufsicht auf den Bildsensor und das einzeilige Array gemäß einem Ausführungsbeispiel, wobei eine Änderung eines Abstands zwischen Bildsensor und Array für eine Fokusfunktion ermöglicht ist;
- Fig. 10b: eine schematische Seitenansicht des Bildsensors und des einzeiligen Arrays aus Fig. 10a;
- Fig. 11a: eine schematische Aufsicht auf den Bildsensor und das einzeilige Array gemäß einem weiteren Ausführungsbeispiel, wobei zwei piezoelektrische Aktoren mit dem Bildsensor verbunden sind und wobei eine Änderung eines Abstands zwischen Bildsensor und Array für eine Fokusfunktion ermöglicht ist;
- Fig. 11b: eine schematische Seitenansicht der Anordnung von Bildsensor und einzeiligem Array aus Fig. 11a;
- Fig. 12a: eine schematische Aufsicht auf den Bildsensor und das einzeilige Array gemäß einem Ausführungsbeispiel, mit einer flexiblen mechanische Verbindung zwischen dem piezoelektrischen Aktor und dem einzeiligen Array;
- Fig. 12b: eine mit Fig. 12a vergleichbare Anordnung des Bildsensors und des einzeiligen Arrays, wobei die Aktoren über die mechanischen Umlenkeinrichtungen mit dem einzeiligen Arrayverbunden sind, gemäß einem Ausführungsbeispiel;
- Fig. 13a: eine schematische Aufsicht auf den Bildsensor und das einzeilige Array gemäß einem Beispiel, wobei der Bildsensor gegenüber dem einzeiligen Array entlang einer Zeilenerstreckungsrichtung relativ bewegt wird;
- Fig. 13b: eine schematische Aufsicht auf den Bildsensor und das einzeilige Array gemäß einem Beispiel, wobei zwei Aktoren eine Bewegung des Bildsensors gegenüber dem einzeiligen Array ermöglichen;
- Fig. 14: eine schematische Aufsicht auf eine weitere Multiaperturabbildungsvorrichtung gemäß einem Ausführungsbeispiel;
- Fig. 15: eine schematische Aufsicht auf eine Multiaperturabbildungsvorrichtung gemäß einem Ausführungsbeispiel, bei der die Strahlumlenkeinrichtung als ebene reflektierende Fläche gebildet ist;
- Fig. 16: eine schematische Aufsicht auf eine Multiaperturabbildungsvorrichtung gemäß einem nicht unter die Ansprüche fallenden Beispiel, wobei die Aktoreinrichtung Tauchspulenantriebe umfasst
- Fig. 17a: eine schematische Aufsicht auf eine Multiaperturabbildungsvorrichtung gemäß einem Z nicht unter die Ansprüche fallenden Beispiel, bei der die Strahlumlenkeinrichtung eine Anzahl von Strahlumlenkelementen umfasst;
- Fig. 17b: eine schematische Aufsicht auf die Multiaperturabbildungsvorrichtung aus Fig. 17a, bei der die Strahlumlenkeinrichtung eine veränderte Position aufweist;
- Fig. 18a: eine schematische Aufsicht auf eine Multiaperturabbildungsvorrichtung gemäß einem Ausführungsbeispiel, die gegenüber der Multiaperturabbildungsvorrichtung aus Fig. 17a piezoelektrische Aktoren zum Verändern des Abstands zwischen Bildsensor einzeiligem Array umfasst;
- Fig. 18b: die Strahlumlenkeinrichtung der Multiaperturabbildungsvorrichtung aus Fig. in einer veränderten Position;
- Fig. 19a: eine schematische Aufsicht auf den Bildsensor und das einzeilige Array gemäß einem Ausführungsbeispiel, wobei das einzeilige Array mit Aktoren der Aktoreinrichtung verbunden ist;
- Fig. 19b: eine schematische Seitenschnittansicht, in der Multiaperturabbildungsvorrichtung aus Fig. 19a gemäß einem Ausführungsbeispiel, wobei die Aktoren vollständig innerhalb eines Bereichs zweier Ebenen angeordnet sind;
- Fig. 20a: eine schematische Aufsicht auf eine Multiaperturabbildungsvorrichtung gemäß einem Ausführungsbeispiel, die eine Anordnung von Bildsensor und einzeiligem Array gemäß Fig. 19a und 19b aufweist;
- Fig. 20b: eine schematische Seitenschnittansicht der Multiaperturabbildungsvorrichtung aus Fig. 20a;
- Fig. 21a: eine schematische Aufsicht auf eine Konfiguration des Bildsensors und des einzeiligen Arrays gemäß einem Ausführungsbeispiel bei der die Aktoren mit dem Bildsensor verbunden sind;
- Fig. 21b: eine schematische Seitenschnittansicht der Konfiguration gemäß Fig. 21a gemäß einem Ausführungsbeispiel;
- Fig. 22a: eine schematische Aufsicht auf eine Multiaperturabbildungsvorrichtung gemäß einem Ausführungsbeispiel, bei der die Aktoren der Aktoreinrichtung mit dem Bildsensor verbunden sind;
- Fig. 22b: eine schematische Seitenschnittansicht der Multiaperturabbildungsvorrichtung gemäß Fig. 20b, wobei die Aktoren mit dem Bildsensor verbunden sind, gemäß einem Ausführungsbeispiel;
- Fig. 23a: eine schematische Aufsicht auf eine Konfiguration des Bildsensors und des einzeiligen Arrays gemäß einem Ausführungsbeispiel, wobei ein Aktor an einer dem einzeiligen Array abgewandten Seite des Bildsensors angeordnet ist;
- Fig. 23b: eine schematische Seitenschnittansicht der Konfiguration aus Fig. 23a;
- Fig. 24a: eine schematische Aufsicht auf den Bildsensor und das einzeilige Array gemäß einem Ausführungsbeispiel, wobei der Aktor mittels einer mechanischen Verbindung mit dem einzeiligen Array verbunden ist;
- Fig. 24b: eine schematische Seitenschnittansicht der Konfiguration aus Fig. 24a;
- Fig. 25: eine schematische Seitenschnittansicht einer Multiaperturabbildungsvorrichtung, mit einer drehbar gelagerten Strahlumlenkeinrichtung gemäß einem Ausführungsbeispiel;
- Fig. 26: eine schematische Darstellung eines Gesamtgesichtsfelds, wie es mit hierin beschriebenen Ausführungsbeispielen erfassbar ist;
- Fig. 27: eine schematische perspektivische Ansicht eines Abbildungssystems gemäß einem Ausführungsbeispiel; und
- Fig. 28: einen schematischen Aufbau umfassend eine erste Multiaperturabbildungsvorrichtung und eine zweite Multiaperturabbildungsvorrichtung mit einem gemeinsamen Bildsensor.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden unter Bezugnahme auf relative Lagebegriffe wie vorne, hinten, links, rechts, oben oder unten beschrieben. Es versteht sich, dass diese Begriffe wechselseitig oder paarweise vertauschbar sind, ohne die hierin beschriebene Lehre einzuschränken. Deshalb wirken diese Begriffe nicht einschränkend, sondern dienen lediglich der besseren Verständlichkeit.

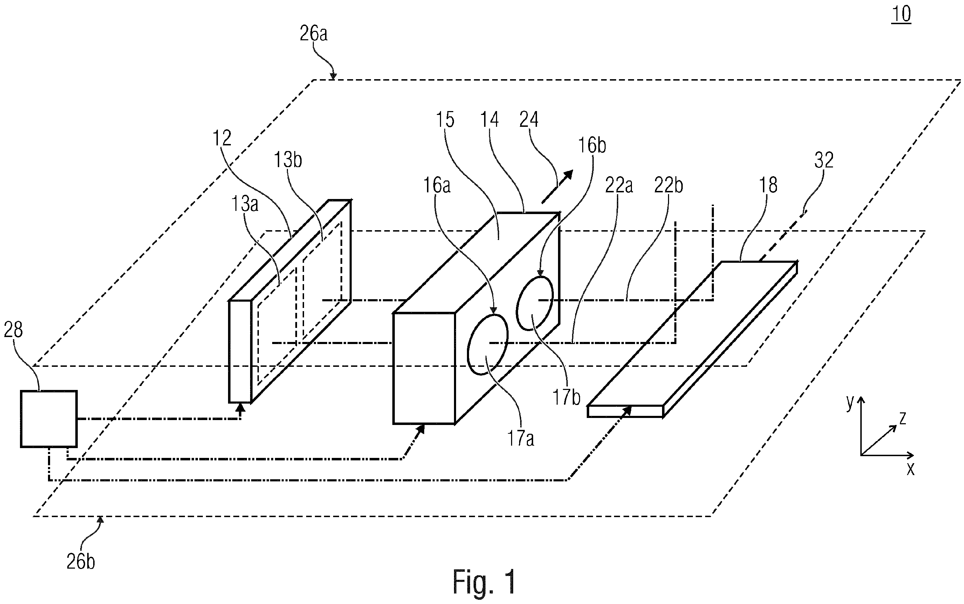

Fig. 1 zeigt eine schematische perspektivische Ansicht einer Multiaperturabbildungsvorrichtung 10 gemäß einem Ausführungsbeispiel. Die Multiaperturabbildungsvorrichtung 10 umfasst einen Bildsensor 12, ein einzeiliges Array 14 von nebeneinander angeordneten optischen Kanälen 16a und 16b. Jeder optische Kanal umfasst eine Optik 17a bzw. 17b zur Abbildung eines Teilbereichs eines Objektbereichs auf einen Bildsensorbereich 13a bzw. 13b des Bildsensors 12. Die Multiaperturabbildungsvorrichtung 10 umfasst eine Strahlumlenkeinrichtung 18 zum Umlenken eines, mehrerer oder eines jeden Strahlengangs 22a und/oder 22b der optischen Kanäle 16a bzw. 16b. Optische Kanäle können als ein Verlauf von Strahlengängen 22a und 22b verstanden werden. Die Strahlengänge 22a und 22b können durch das Array 14 hindurchverlaufen, so dass auch die optischen Kanäle 16a und 16b durch das Array 14 hindurchlaufen können. Die optischen Kanäle 16a und 16b sind beispielsweise durch das Array 14 nicht in einer axialen Ausdehnung entlang einer Strahlerstreckungsrichtung zwischen dem Bildsensor 12 und der Strahlumlenkeinrichtung 18 begrenzt.

Das einzeilige Array 14 weist einen Träger 15 auf, durch den die optischen Kanäle hindurchlaufen. Hierfür kann der Träger 15 beispielsweise opak ausgebildet sein und transparente Bereiche für die optischen Kanäle aufweisen. Innerhalb der oder benachbart zu den transparenten Bereichen und/oder an Endbereichen hiervon können die Optiken der optischen Kanäle angeordnet sein. Alternativ oder zusätzlich kann der Träger 15 transparent gebildet sein und beispielsweise ein Polymermaterial und/oder ein Glasmaterial aufweisen. An einer Oberfläche des Trägers 15 können Optiken (Linsen) angeordnet sein, die die Abbildung des jeweiligen Teilgesichtsfeldes des Gesamtgesichtsfeldes auf den jeweiligen Bildsensorbereich 13a-b des Bildsensors 12 beeinflussen.

Die Bildsensorbereiche 13a und 13b können beispielsweise jeweils aus einem Chip gebildet sein, der ein entsprechendes Pixelarray umfasst, wobei die Bildsensorbereiche auf einem gemeinsamen Substrat bzw. einer gemeinsamen Platine montiert sein können. Alternativ wäre es natürlich auch möglich, dass die Bildsensorbereiche 13a und 13b jeweils aus einem Teil eines gemeinsamen Pixelarrays, das sich kontinuierlich über die Bildsensorbereiche 13a und 13b erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 13a und 13b ausgelesen. Verschiedene Mischungen dieser Alternativen sind natürlich ebenfalls möglich, wie z.B. das Vorhandensein eines Chips für zwei oder mehr Kanäle und eines weiteren Chips für wiederum andere Kanäle oder dergleichen. In dem Fall mehrerer Chips des Bildsensors 12 können diese beispielsweise auf einer oder mehreren Platinen montiert sein, wie z.B. alle gemeinsam oder gruppenweise oder dergleichen.

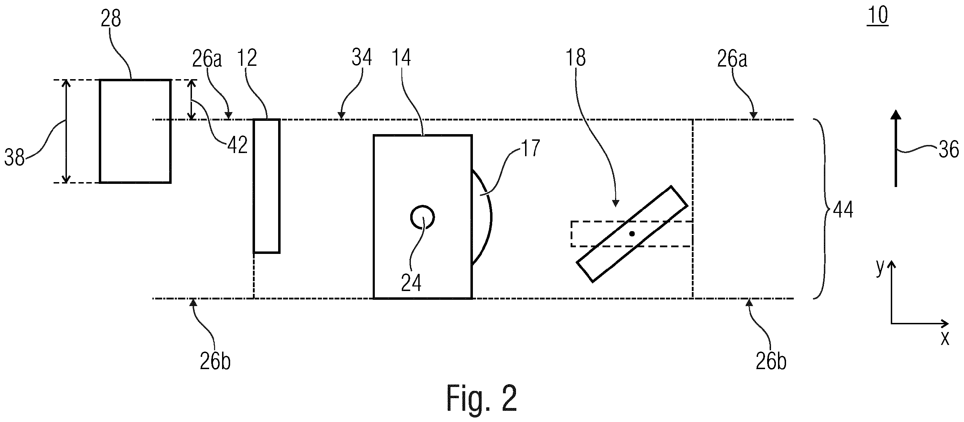

Wie es im Zusammenhang mit Fig. 2 detaillierter beschrieben ist, können der Bildsensor 12, das Array 14 und die Strahlumlenkeinrichtung 18 einen Quader im Raum aufspannen. Der Quader kann auch als virtueller Quader verstanden werden und kann beispielsweise ein minimales Volumen und insbesondere eine minimale senkrechte Ausdehnung entlang einer Richtung zu einer y-Richtung oder einer Dickenrichtung aufweisen und den Bildsensor, das einzeilige Array 14 und die Strahlumlenkeinrichtung 18 umfassen. Das minimale Volumen kann auch so verstanden werden, dass es einen Quader beschreibt, der durch die Anordnung und/oder betriebsgemäße Bewegung des Bildsensors 12, des Arrays 14 und/oder der Strahlumlenkeinrichtung 18 aufgespannt ist. Das einzeilige Array 14 kann eine Zeilenerstreckungsrichtung 24 aufweisen, entlang derer die optischen Kanäle 16a und 16b nebeneinander, ggf. parallel zueinander, angeordnet sind. Die Zeilenerstreckungsrichtung 24 kann ortsfest im Raum angeordnet sein.

Der virtuelle Quader kann zwei Seiten aufweisen, die gegenüberliegend parallel zueinander, parallel zu der Zeilenerstreckungsrichtung 24 des einzeiligen Arrays 14 sowie parallel zu einem Teil des Strahlengangs 22a und/oder 22b der optischen Kanäle 16a bzw. 16b zwischen dem Bildsensor 12 und der Strahlumlenkeinrichtung 18 ausgerichtet sind. Vereinfacht, jedoch ohne einschränkende Wirkung, können dies beispielsweise eine Oberseite und eine Unterseite des virtuellen Quaders sein. Die zwei Seiten können eine erste Ebene 26a und eine zweite Ebene 26b aufspannen. D.h., die beiden Seiten des Quaders können jeweils Teil der Ebene 26a bzw. 26b sein. Weitere Komponenten der Multiaperturabbildungsvorrichtung können vollständig, zumindest aber teilweise innerhalb des Bereichs zwischen den Ebenen 26a und 26b angeordnet sein, so dass ein Bauraumbedarf der Multiaperturabbildungsvorrichtung 10 entlang einer Richtung parallel zu einer Oberflächennormalen der Ebenen 26a und/oder 26b gering ist, was vorteilhaft ist. Ein Volumen der Multiaperturabbildungsvorrichtung kann einen geringen oder minimalen Bauraum zwischen den Ebenen 26a und 26b aufweisen. Entlang der lateralen Seiten oder Erstreckungsrichtungen der Ebenen 26a und/oder 26b kann ein Bauraum der Multiaperturabbildungsvorrichtung groß oder beliebig groß sein. Das Volumen des virtuellen Quaders ist bspw. von einer Anordnung des Bildsensors 12, des einzeiligen Arrays 14 und der Strahlumlenkeinrichtung beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 26a und 26b zueinander gering oder minimal wird. Gegenüber anderen Anordnungen der Komponenten kann das Volumen und/oder der Abstand anderer Seiten des virtuellen Quaders vergrößert sein.

Die Multiaperturabbildungsvorrichtung 10 umfasst eine Aktoreinrichtung 28 zum Erzeugen einer Relativbewegung zwischen dem Bildsensor 12, dem einzeiligen Array 14 und der Strahlumlenkeinrichtung 18. Die Aktoreinrichtung ist zumindest teilweise zwischen den Ebenen 26a und 26b angeordnet. Die Aktoreinrichtung 28 kann ausgebildet sein, um zumindest eines aus dem Bildsensor 12, dem einzeiligen Array 14 oder der Strahlumlenkeinrichtung 18 rotatorisch um zumindest eine Achse und/oder translatorisch entlang einer oder mehrerer Richtungen oder zu bewegen. Hierfür kann die Aktoreinrichtung 28 zumindest einen Aktor aufweisen, der ausgebildet ist, um den Bildsensor 12, das einzeilige Array 14 und/oder der die Strahlumlenkeinrichtung 18 relativ zu zumindest einer anderen Komponente zu bewegen.

Wie es nachfolgend detailliert beschrieben wird, kann eine Änderung eines Abstands zwischen dem Bildsensor 12 und dem einzeiligen Array 14 beispielsweise zur Veränderung eines Fokus der optischen Kanäle 16a und/oder 16b nutzbar sein. Alternativ oder zusätzlich kann eine optische Bildstabilisierung ermöglicht werden. Hierfür kann eine translatorische Relativbewegung zwischen dem Bildsensor 12 und dem einzeiligen Array 14 basierend auf einer Bewegung des Bildsensors 12 gegenüber dem einzeiligen Array 14 und/oder umgekehrt von der Aktoreinrichtung 28 erzeugbar sein. Die Relativbewegung kann entlang der Zeilenerstreckungsrichtung 24 bzw. entlang einer Richtung parallel oder antiparallel hierzu erzeugt werden, um eine optische Bildstabilisierung entlang einer ersten Bildachse eines zu erfassenden Bildes zu erhalten. Alternativ oder zusätzlich kann eine laterale Verschiebung der Strahlumlenkeinrichtung 18, beispielsweise entlang der Zeilenerstreckungsrichtung 24 und/oder eine Rotation der Strahlumlenkeinrichtung 18 um eine Rotationsachse 32 für ein Umschalten zwischen Blickrichtungen der Multiaperturabbildungsvorrichtung 10 und/oder für eine optische Bildstabilisierung entlang einer zweiten Bildachse erzeugt werden. Die Rotationsachse 32 kann beispielsweise parallel zu der Zeilenerstreckungsrichtung 24 und/oder senkrecht hierzu im Raum angeordnet sein. Die Rotationsbewegung der Strahlumlenkeinrichtung 18 kann um die Achse 32 erfolgen, wobei die Achse 32 parallel zu der Zeilenerstreckungsrichtung 24 angeordnet sein kann.

Gemäß Ausführungsbeispielen ist die Aktoreinrichtung 28 ausgebildet, um die Relativbewegung zwischen dem Bildsensor 12, dem einzeiligen Array 14 und der Strahlumlenkeinrichtung 18 so zu erzeugen, dass eine geringe Ausdehnung der Multiaperturabbildungsvorrichtung 10 entlang einer Richtung senkrecht zu den Ebenen 26a und/oder 26b erhalten wird. Bspw. kann die Aktoreinrichtung ausgebildet sein, um für die optische Bildstabilisierung eine relative translatorische Verschiebung zwischen Bildsensor 12 und einzeiligem Array 14 parallel und/antiparallel zu der Zeilenerstreckungsrichtung 24 und eine rotatorische Bewegung der Strahlumlenkeinrichtung um die Achse 32 zu erzeugen. Dies kann ein Vorhalten eines Bauraums entlang einer Dickenrichtung senkrecht zu den Ebenen 26a und/oder 26b vermeiden und eine miniaturisierte Multiaperturabbildungsvorrichtung ermöglichen. Das bedeutet, dass durch die optische Bildstabilisierung eine Größe des virtuellen Quaders entlang einer Richtung senkrecht zu der Zeilenerstreckungsrichtung 24 und senkrecht zu den Strahlengängen 22a und/oder 22b zwischen dem Bildsensor 12 und der Strahlumlenkeinrichtung 18 nicht oder nur unwesentlich vergrößert wird. Bei dieser Richtung handelt es sich um eine y-Richtung, die auch als Dickenrichtung bezeichnet wird. Beispielsweise kann der Strahlengang 22a und/oder 22b zwischen dem Bildsensor 12 und der Strahlumlenkeinrichtung 18 zumindest abschnittsweise entlang einer x-Richtung im Raum verlaufen. Die Zeilenerstreckungsrichtung 24 kann beispielsweise im Wesentlichen parallel zu einer z-Richtung im Raum angeordnet sein.

Die x-Richtung, die y-Richtung und die z-Richtung können beispielsweise ein kartesisches Koordinatensystem aufspannen. Gemäß weiteren Ausführungsbeispielen weisen eine x-Achse, eine y-Achse und/oder eine z-Achse einen Winkel von ≠ 90° zueinander auf. Vorteilhaft an der Anordnung der Aktoreinrichtung 28 zwischen den Ebenen 26a und 26b ist, dass eine Ausdehnung der Multiaperturabbildungsvorrichtung 10 entlang der Dickenrichtung y durch die Aktoreinrichtung 28 nicht oder nur unwesentlich vergrößert wird. Dies ermöglicht miniaturisierte oder flachbauende Multiaperturabbildungsvorrichtungen, zumindest entlang der y-Richtung bzw. senkrecht zu der Zeilenerstreckungsrichtung 24. Das ermöglicht, dass die Multiaperturabbildungsvorrichtung in einem flachen Gehäuse angeordnet werden kann.

Fig. 2 zeigt eine schematische Seitenschnittansicht der Multiaperturabbildungsvorrichtung 10. Durch gepunktete Linien ist ein virtueller Quader 34 dargestellt, wie er im Zusammenhang mit Fig. 1 erläutert wird. Der virtuelle Quader 34 weist ein minimales Volumen auf und umfasst dennoch den Bildsensor 12, das einzeilige Array 14 und die Strahlumlenkeinrichtung 18, wobei der virtuelle Quader 34 eine vorgesehene Bewegung der Strahlumlenkeinrichtung 18, des einzeiligen Arrays 14 und des Bildsensors 12 berücksichtigen kann. Die Ebenen 26a und 26b werden durch zwei Seiten des virtuellen Quaders 34 aufgespannt. Eine Dickenrichtung 36 der Multiaperturabbildungsvorrichtung 10 ist normal zu den Ebenen 26a und 26b und parallel zu der y-Richtung angeordnet.

Die Aktoreinrichtung kann eine Abmessung oder Ausdehnung 38 parallel zu der Dickenrichtung 36 aufweisen. Ein Anteil 42 von höchstens 10 % der Abmessung 38 kann ausgehend von einem Bereich 44 zwischen den Ebenen 26a und 26b über die Ebene 26a und/oder 26b hinausragen oder aus dem Bereich 44 herausragen. Das bedeutet, dass die Aktoreinrichtung 28 höchstens unwesentlich über die Ebene 26a und/oder 26b hinausragt. Gemäß Ausführungsbeispielen ragt die Aktoreinrichtung 28 nicht über die Ebenen 26a und 26b hinaus. Vorteilhaft daran ist, dass eine Ausdehnung der Multiaperturabbildungsvorrichtung 10 entlang der Dickenrichtung 36 durch die Aktoreinrichtung 28 nicht vergrößert wird.

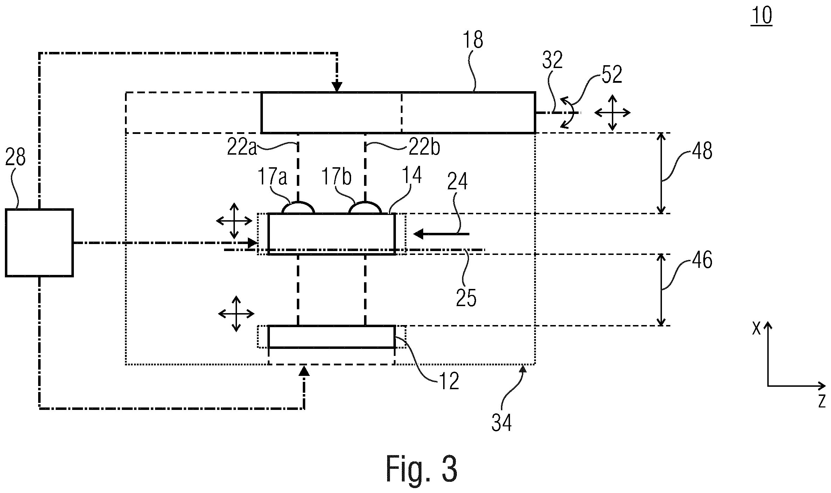

Fig. 3 zeigt eine schematische Aufsicht auf die Multiaperturabbildungsvorrichtung 10 zur Verdeutlichung des virtuellen Quaders. Die Aktoreinrichtung kann ausgebildet sein, um einen Abstand 46 zwischen dem Bildsensor und dem einzeiligen Array zu ändern. Dies kann beispielsweise basierend auf einer Verschiebung des Bildsensors 12 und/oder des einzeiligen Arrays 14 entlang der x-Richtung oder entlang dem Verlauf der Strahlengänge der optischen Kanäle zwischen dem Bildsensor 12 und der Strahlumlenkeinrichtung 18 erfolgen. Dabei kann die Änderung des Abstands 46 mit der gleichzeitigen Änderung des Abstands 48 verbunden sein oder aber der Abstand 48 ist hiervon unberührt, d. h., der Abstand 48 kann beibehalten werden. Gleichzeitig kann hier so verstanden werden, dass der Abstand 48 während eines gleichen Zeitintervalls wie der Abstand 46 verändert wird und/oder anschließend verändert wird, bevor eine Aufnahme des Gesamtgesichtsfeldes erfolgt. Bspw. kann bei einer Änderung der Fokuslage, d. h., des Abstands 46 die Strahlumlenkeinrichtung 18 von der Aktoreinrichtung 28 entsprechend mitbewegt werden, so dass der Abstand 48 konstant oder zumindest im Wesentlichen konstant bleibt. Alternativ kann die Strahlumlenkeinrichtung 18 unbewegt, so dass der Abstand 48 veränderliche ist. Alternativ oder zusätzlich kann die Aktoreinrichtung 28 ausgebildet sein, um einen Abstand 48 zwischen der Strahlumlenkeinrichtung 18 und dem einzeiligen Array 14 zu verändern. Beispielsweise kann die Aktoreinrichtung 28 ausgebildet sein, um die Strahlumlenkeinrichtung 18 und/oder das einzeilige Array 14 entlang des Teils des Strahlengangs der optischen Kanäle zwischen dem Bildsensor 12 und der Strahlumlenkeinrichtung translatorisch relativ zueinander zu bewegen. Alternativ oder zusätzlich kann die Aktoreinrichtung 28 ausgebildet sein, um die Strahlumlenkeinrichtung 18 in eine Rotationsbewegung 52 um die Rotationsachse 32 zu versetzen. Alternativ oder zusätzlich kann die Aktoreinrichtung 28 ausgebildet sein, um die Strahlumlenkeinrichtung 18 translatorisch parallel zu der Zeilenerstreckungsrichtung 24 zu verschieben, etwa um eine Blickrichtung der Multiaperturabbildungsvorrichtung 10 umzuschalten. Das Umschalten der Blickrichtung kann bedeuten, dass die Strahlumlenkeinrichtung den Strahlengang veränderlich so ablenkt, dass der abgelenkte Strahlengang durch veränderliche Seiten aus dem Gehäuse der Multiaperturabbildungsvorrichtung 10 austreten kann.

Alternativ oder zusätzlich kann die Aktoreinrichtung 28 ausgebildet sein, um das einzeilige Array 14 und den Bildsensor 12 relativ zueinander parallel zu der Zeilenerstreckungsrichtung 24 zu bewegen, etwa durch eine translatorische Bewegung des einzeiligen Arrays 14 und/oder durch eine translatorische Bewegung des Bildsensors 12 entlang der Zeilenerstreckungsrichtung 24. Dies kann für eine optische Bildstabilisierung entlang zumindest einer Bildachse nutzbar sein. Die translatorische Bewegung kann auch zweidimensional parallel zu der Zeilenerstreckungsrichtung und senkrecht hierzu (bspw. entlang der z-Richtung und entlang der y-Richtung) erfolgen, um damit eine optische Bildstabilisierung entlang zweier Bildachsen zu ermöglichen.

Die Aktoreinrichtung 28 zum Erzeugen der Relativbewegung kann an einer dem einzeiligen Array 14 abgewandten Seite des Bildsensors 12 angeordnet sein, wie es beispielsweise in Fig. 2 dargestellt ist. Dies kann vereinfachend, jedoch ohne einschränkende Wirkung, als eine Anordnung eines Aktors der Aktoreinrichtung 28 hinter dem Bildsensor 12 verstanden werden. Alternativ oder zusätzlich kann die Aktoreinrichtung 28 entlang einer Richtung parallel zu der Zeilenerstreckungsrichtung 24 lateral versetzt zu dem virtuellen Quader 34 angeordnet sein, wie es beispielsweise in Fig. 3 dargestellt ist. Dies kann vereinfachend, jedoch ohne einschränkende Wirkung, als eine Anordnung des Aktors neben dem Bildsensor 12, dem einzeiligen Array 14 und/oder der Strahlumlenkeinrichtung 18 verstanden werden. Alternativ oder zusätzlich kann die Aktoreinrichtung 28 oder zumindest ein Aktor davon an einer dem einzeiligen Array 14 abgewandten Seite der Strahlumlenkeinrichtung angeordnet sein kann. Das bedeutet, dass die Relativbewegung eine Veränderung des Abstands 46 zwischen dem Bildsensor und dem einzeiligen Array entlang der Strahlrichtung parallel zu einem Strahlengang durch die optischen Kanäle zwischen dem Bildsensor 12 und der Strahlumlenkeinrichtung 18 oder eine Veränderung des Abstands 48 zwischen dem einzeiligen Array 14 und der Strahlumlenkeinrichtung 18 entlang der Strahlrichtung umfassen kann. Dies kann die Veränderung der Fokuslage ermöglichen. Alternativ oder zusätzlich kann translatorische Relativbewegung des einzeiligen Arrays 14 und/oder die translatorische Relativbewegung des Bildsensors 12 entlang der Zeilenerstreckungsrichtung 24 eine optische Bildstabilisierung ermöglichen.

Die Aktoreinrichtung kann einen Aktor, etwa einen Tauchspulenmotor, umfassen, der ausgebildet ist, um für eine optische Bildstabilisierung eine Relativposition des Bildsensors 12 bezüglich des einzeiligen Arrays 14 in einer Ebene 25 senkrecht zu einer Zeilenerstreckungsrichtung 24 des einzeiligen Arrays 14 und parallel zu dem Bildsensor 12 zu verändern. Die Relativposition kann entlang einer oder zwei Richtungen veränderbar sein.

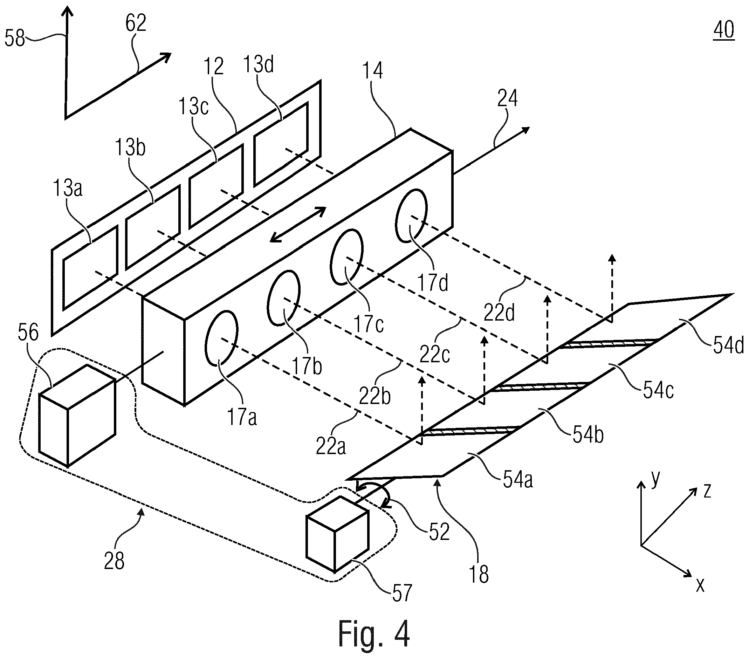

Fig. 4 zeigt eine schematische perspektivische Ansicht einer Multiaperturabbildungsvorrichtung 40 gemäß einem Ausführungsbeispiel. Die Multiaperturabbildungsvorrichtung 40 umfasst den Bildsensor 12, der beispielsweise vier Bildsensorbereiche oder Bildsensorteilbereiche 13a-d umfasst. Jeder Bildsensorbereich 13a-d kann einem optischen Kanal zugeordnet sein. Das einzeilige Array 14 umfasst vier Optiken 17a-d, die Teile von nebeneinander angeordneten optischen Kanälen sind, die entlang der Zeilenerstreckungsrichtung 24 angeordnet sind. Die Strahlumlenkeinrichtung 18 umfasst beispielsweise eine Anzahl von Strahlumlenkelementen 54a-d, die einer Anzahl von optischen Kanälen und/oder eine Anzahl von Optiken 17a-d entsprechen kann. Beispielsweise kann jedes Strahlumlenkelement 54a-d ausgebildet sein, um zwischen dem Bildsensor 12 und der Strahlumlenkeinrichtung 18 zumindest abschnittsweise parallel verlaufende Strahlengänge 22a-d in voneinander verschiedene Richtungen umzulenken, so dass jeder Strahlengang 22a-d in voneinander verschiedene aber teilweise überlappende Teilgesichtsfelder eines Gesamtgesichtsfelds (Objektbereich) gelenkt wird. Das bedeutet, obwohl die Strahlengänge 22a-d in die gleiche Blickrichtung umlenkbar sind, können die Strahlengänge 22a-d innerhalb der gleichen Blickrichtung nach dem Umlenken durch die Strahlumlenkeinrichtung einen Winkel zueinander aufweisen, um in voneinander verschiedene Teilgesichtsfelder gelenkt zu werden. Die Strahlumlenkelemente 54a-d können beispielsweise Facetten und/oder voneinander verschieden gekrümmte Flächen sein. Die Anzahl von Facetten kann dabei von der Anzahl optischer Kanäle unterschiedlich sein. Die Strahlengänge 22a-d können zwischen dem Bildsensor 12 und der Strahlumlenkeinrichtung 18 parallel zueinander ausgerichtet sein und von der Strahlumlenkeinrichtung in von einander verschiedene Richtungen umgelenkt werden. Alternativ oder zusätzlich können Optiken des einzeiligen Arrays die Strahlengänge 22a-d entlang zumindest einer Richtung ablenken, so dass die Strahlengänge 22a-d nicht parallel zueinander ausgerichtet auf die Strahlumlenkeinrichtung 18 treffen können.

Die Aktoreinrichtung 28 umfasst einen ersten Aktor 56, der ausgebildet ist, um das einzeilige Array 14 translatorisch entlang der Zeilenerstreckungsrichtung 24 und/oder entgegengesetzt hierzu zu bewegen. Die Aktoreinrichtung 28 umfasst einen zweiten Aktor 57, der ausgebildet ist, um die Rotationsbewegung 52 zu erzeugen. Basierend auf der Rotationsbewegung 52 kann eine optische Bildstabilisierung entlang einer Bildachse 58 senkrecht zu der Zeilenerstreckungsrichtung 24 erhalten werden. Die Rotationsbewegung kann bspw. einen Winkelbereich von ±15°, ±10° oder ±1° bezogen auf eine Position der Strahlumlenkeinrichtung 18 aufweisen. Dies kann bspw. als eine zusätzliche Verkippung um eine stabile oder positionsdiskrete Position der Strahlumlenkeinrichtung verstanden werden. Basierend auf der translatorischen Bewegung des einzeiligen Arrays 14 kann eine optische Bildstabilisierung entlang einer Bildachse 62 parallel zu der Zeilenerstreckungsrichtung 24 erhalten werden.

Alternativ oder zusätzlich kann der Aktor 56 oder ein weiterer Aktor ausgebildet sein, um den Bildsensor 12 entlang oder entgegensetzt der Zeilenerstreckungsrichtung 24 zu bewegen. Es kann vorteilhaft sein, das einzeilige Array 14 translatorisch zu verschieben, etwa um elektrische Verbindungen des Bildsensors in geringem Umfang mechanisch zu belasten.

Alternativ oder zusätzlich kann der Aktor 57 ausgebildet sein, um die Strahlumlenkeinrichtung 18 relativ zu dem einzeiligen Array 14 und/oder dem Bildsensor 12 parallel zu der Zeilenerstreckungsrichtung 24 oder entgegengesetzt hierzu zu bewegen, um die optische Bildstabilisierung entlang der Bildachse 62 zu erhalten. Die Zeilenerstreckungsrichtung 24 kann parallel zu der Bildachse 62 angeordnet sein.

Wie es in Fig. 4 dargestellt ist, ist die Strahlumlenkeinrichtung 18 ausgebildet, um die Strahlengänge 22a-d der optischen Kanäle umzulenken, beispielsweise entlang einer positiven y-Richtung. Eine der Rotationsbewegung 52 zur optischen Bildstabilisierung überlagerte Rotationsbewegung, beispielsweise erzeugbar durch den Aktor 57, kann dazu führen, dass die Strahlengänge 22a-d in eine andere Richtung, beispielsweise entlang einer negativen y-Richtung umgelenkt werden. Bspw. kann die Strahlumlenkeinrichtung 18 beidseitig reflektiv ausgebildet sein, d. h., zwei Hauptseiten aufweisen, die jeweils reflektiv ausgebildet sind. Die Rotationsbewegung kann auch als ein Umschalten zwischen Blickrichtungen der Multiaperturabbildungsvorrichtung 40 verstanden werden. Das Umschalten zwischen den Blickrichtungen kann beispielsweise durch einfach stabile, bistabile oder mehrfach stabile Positionen der Strahlumlenkeinrichtung 18 erfolgen, wobei für Blickrichtungen der Multiaperturabbildungsvorrichtung 40 jeweils eine stabile Position der Strahlumlenkeinrichtung 18 vorgesehen sein kann. Wie es im Zusammenhang mit weiteren Ausführungsbeispielen beschrieben ist, kann die Multiaperturabbildungsvorrichtung so ausgebildet sein, dass ein Umschalten zwischen Blickrichtungen auch basierend auf einer translatorischen Bewegung der Strahlumlenkeinrichtung 18 erfolgt. Eine translatorische Bewegung oder eine rotatorische Bewegung kann so konfiguriert sein, dass die Strahlumlenkeinrichtung zwischen stabilen Positionen umgeschaltet wird.

Nachfolgend werden einige vorteilhafte Anordnungen und/oder Ausführungen von Aktoren der Aktoreinrichtung beschrieben. Die hierin beschriebenen Wirkprinzipien können untereinander beliebig kombiniert, zusammengeführt oder substituiert werden.

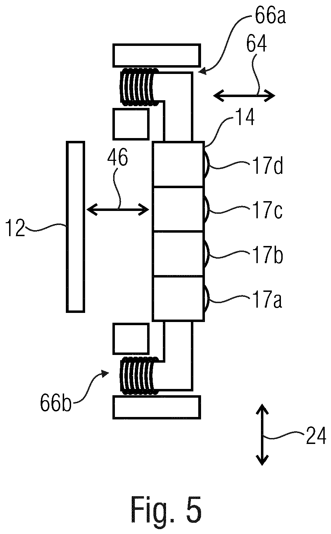

Fig. 5 zeigt eine schematische Aufsicht auf den Bildsensor 12 und das einzeilige Array 14, wobei das einzeilige Array 14 mit zwei als Tauchspulenmotoren ausgebildeten Aktoren 56a und 56b der Aktoreinrichtung verbunden ist. Die Aktoren 66a und 66b sind ausgebildet, um das einzeilige Array entlang einer Richtung 64 zu bewegen, um den Abstand 46 zwischen dem einzeiligen Array 14 und dem Bildsensor zu verändern. Die Richtung 64 kann senkrecht zu der Zeilenerstreckungsrichtung 24 im Raum angeordnet sein und beispielsweise parallel zu einer Richtung der Strahlengänge der optischen Kanäle verlaufen. Basierend auf einer Änderung des Abstands 46 kann ein Fokus der optischen Kanäle veränderbar sein, so dass eine Fokusfunktion und/oder eine Autofokusfunktion erhalten werden kann. Die Aktoren 66a und 66b können beispielsweise alternativ oder zusätzlich zu dem Aktor 56 angeordnet sein und Teil der Aktoreinrichtung 28 sein. Die Aktoren 66a und 66b können gleichlaufend oder individuell angesteuert werden, um gezielt eine parallele bzw. eine winklige Ausrichtung des Array 14 bzgl. des Bildsensors 12 einzustellen.

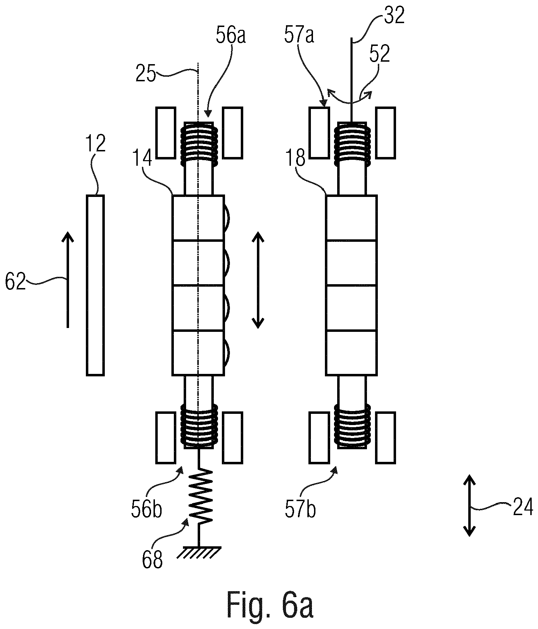

Fig. 6a zeigt eine schematische Aufsicht auf den Bildsensor 12, das einzeilige Array 14 und die Strahlumlenkeinrichtung 18. Aktoren 56a und 56b sind mit dem einzeiligen Array 14 verbunden oder daran angeordnet und ausgebildet, um das einzeilige Array 14 entlang der Zeilenerstreckungsrichtung 24 zu verschieben. Das bedeutet, dass die Aktoreinrichtung einen Aktor 56a und/oder 56b umfassen kann, der oder die ausgebildet sind, um das einzeilige Array 14 entlang der Zeilenerstreckungsrichtung 24 zu bewegen.

Basierend auf der Verschiebung des einzeiligen Arrays 14 entlang der Zeilenerstreckungsrichtung 24 kann beispielsweise eine optische Bildstabilisierung entlang der Bildachse 62 erhalten werden. Das einzeilige Array 14 kann mechanisch mit einem Rückstellelement 68 verbunden sein. Hierbei kann es sich beispielsweise um eine Rückstellfeder handeln. Das Federelement 68 kann beispielsweise ausgebildet sein, um das einzeilige Array 14 in Abwesenheit von Kräften, die durch die Aktoren 56a und/oder 56b erzeugt werden, in eine vordefinierte Position und/oder eine Ausgangsposition zu bewegen. Hierbei kann es sich beispielsweise um eine minimale Position oder eine maximale Position entlang der Zeilenerstreckungsrichtung 24 und/oder um eine Mittenposition handeln. Der Aktor 56a kann ausgebildet sein, um eine Relativposition des Bildsensors 12 bezüglich des einzeiligen Arrays 14 in der Ebene 25 zu verändern. Das Federelement 68 kann beispielsweise als mechanische, pneumatische, hydraulische oder andersartig gebildete Feder implementierbar sein. Die Aktoren 56a und/oder 56b können beispielsweise als Tauchspulenantriebe implementiert sein. Die Strahlumlenkeinrichtung kann mit Aktoren 57a und/oder 57b verbunden sein, die ausgebildet sein können, um die Strahlumlenkeinrichtung 18 in die Rotationsbewegung 52 zu versetzen, wie es im Zusammenhang mit dem in Fig. 4 dargestellten Aktor 57 beschrieben ist. Die Rotationsbewegung 52 um die Rotationsachse 32 kann für eine optische Bildstabilisierung entlang einer Bildachse senkrecht zu der Rotationsachse 32 nutzbar sein, beispielsweise die im Zusammenhang mit Fig. 4 beschriebene Bildachse 58, die beispielsweise senkrecht zu der Bildachse 62 angeordnet ist. Vereinfacht ausgedrückt kann es sich bei den Bildachsen 58 und 62 um senkrecht zueinander angeordnete Bildachsen handeln, die eine Bildfläche eines zu erfassenden Bildes aufspannen.

Die Aktoren 57a und 57b können beispielsweise als pneumatischer, hydraulischer, piezoelektrischer Aktoren, DC-Motoren, Schrittmotoren, thermischer Aktoren, elektrostatischer Aktoren, elektrostriktiver und/oder magnetostriktiver Aktoren oder Antriebe, Wechselstrommotoren und/oder Tauchspulenantriebe gebildet sein.

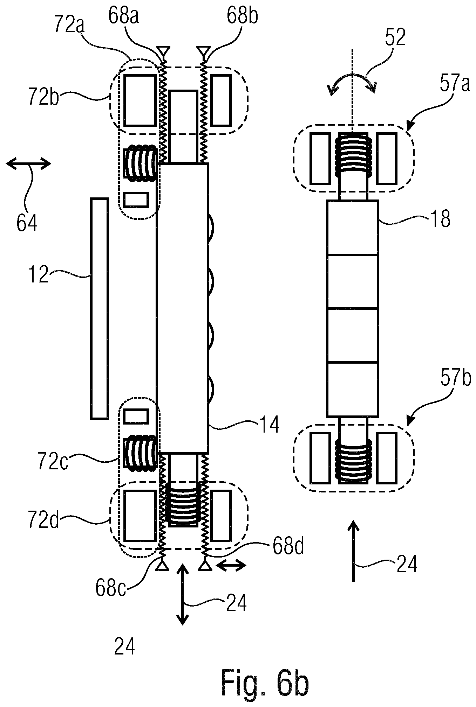

Fig. 6b zeigt eine schematische Aufsicht auf die Anordnung des Bildsensors 12 und des einzeiligen Arrays 14. Das einzeilige Array 14 kann mit einer Vielzahl von Aktoren 72a-d verbunden sein, die jeweils ausgebildet sind, um das einzeilige Array 14 entlang einer einzigen Richtung 24 oder 64 zu bewegen. Basierend auf einer parallelen oder sequentiellen Überlagerlagerung von mehreren Aktorkräften kann eine parallele, d. h. in gleicher Richtung, bzw. serielle, d. h., in einander überlagerten verschiedenen Richtungen, Verschiebung des Arrays 14 entlang mehrerer Richtungen erfolgen. Bspw. kann ein Aktor 72a ausgebildet sein, um das einzeilige Array 14 entlang der Richtung 64 zu verschieben. Ein weiterer Aktor 72b kann ausgebildet sein, um das einzeilige Array 14 entlang der Zeilenerstreckungsrichtung 24 zu verschieben. Obwohl es so dargestellt ist, dass die Aktoren 72a und 72b einen gemeinsamen Statormagneten aufweisen, können beide Aktoren 72a und 72b auch jeweils aus eigenen Komponenten gebildet sein, das bedeutet, unabhängig voneinander.

Die Aktoren 72a und 72b können an einer ersten Seite des einzeiligen Arrays angeordnet sein. An einer zweiten Seite des einzeiligen Arrays 14, etwa einer gegenüberliegenden Seite entlang der Zeilenerstreckungsrichtung 24 können ein oder mehrere weitere Aktoren angeordnet sein, etwa die Aktoren 72c und 72d, die mit den Aktoren 72a und 72b in Gleichwirkdung stehen und ausgebildet sind, um die Verschiebung des einzeiligen Arrays 14 gemeinsam mit den Aktoren 72a und/oder 72b erzeugen. Insbesondere die Aktoren 72a und 72c können über eine individuelle Ansteuerung und damit verbunden eine individuelle Auslenkung verfügen, so dass eine gezielte Verkippung des einzeiligen Arrays 14 gegenüber dem Bildsensor 12 resultiert. Allgemein können die Antriebe 72a-d über individuelle Ansteuerungen verfügen, um z.B. exemplarabhängige Abweichungen der erzielten Bewegung der Aktoren 72a-d von der Ansteuergröße auszugleichen.

Federelemente 68a-d können zwischen dem einzeiligen Array 14 und festen Ankerpunkten angeordnet sein und ausgebildet sein, um eine Referenzposition, etwa eine Maximalposition oder Mittenposition des einzeiligen Arrays 14 einzustellen, wenn keine Kräfte der Aktoren 72a-d wirken. Obwohl an einer Seite des einzeiligen Arrays 14 jeweils zwei Federelemente 68a und 68b bzw. 68c und 68d dargestellt sind, kann auch eine andere Anzahl von Federelementen angeordnet sein, etwa kein Federelement, ein Federelement oder mehr als 2 Federelemente, die seriell oder parallel verschaltet sein können.

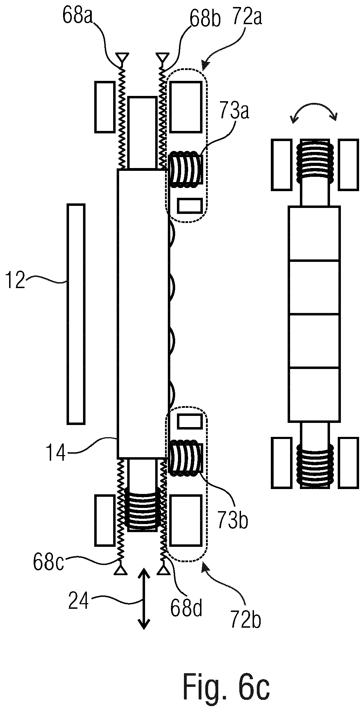

Fig. 6c zeigt eine schematische Ansicht der Anordnung aus Fig. 5b, bei der zumindest eine Komponente 73a oder 73b des Aktors 72a bzw. 72c an einer dem Bildsensor 12 abgewandten Seite des einzeiligen Arrays 14 angeordnet ist. Bei den Komponenten 73a und 73b kann es sich bspw. um die Tauchspulen von als Tauchspulenantrieben gebildeten Aktoren 72a und 72d handeln, wobei die Aktoren auch anders gebildet sein können. Es können auch weitere Komponenten an der dem Bildsensor 12 abgewandten Seite des einzeiligen Arrays 14 angeordnet sein, etwa Statormagnete. Sind die Aktoren 72a und/oder 72c anders als Tauchspulenantriebe gebildet, so können dementsprechende Komponenten an einer dem Bildsensor 12 zugewandten oder abgewandten Seite des einzeiligen Arrays 14 angeordnet sein. Alternativ ist ebenfalls vorstellbar, dass eine oder mehrere Komponenten von Aktoren seitlich, d. h. entlang der Zeilenerstreckungsrichtung 24, neben dem einzeiligen Array 14 angeordnet sind.

Obwohl die Fig. 6b und 6c so beschrieben sind, dass die Position der Aktoren 72 symmetrisch ist und die Aktoren 72a-d gleich gebildet sind, können sowohl die Position als auch die Art von Komponenten der Aktoren oder der gesamten Aktoren frei mit einander kombiniert und variiert werden.

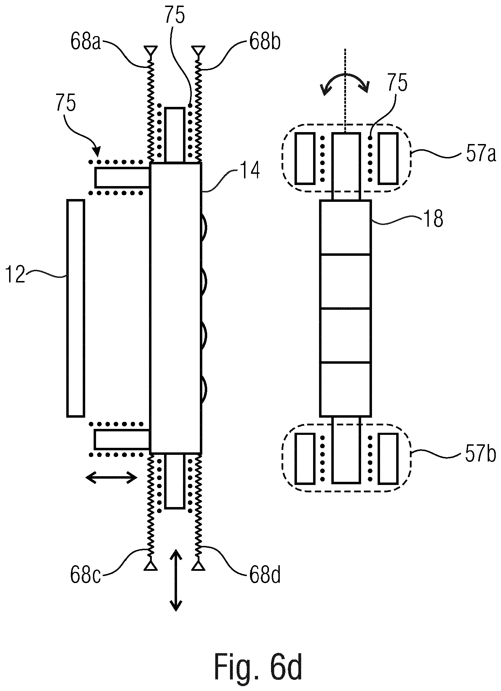

Fig. 6d zeigt eine schematische Aufsicht auf die Anordnung gemäß Fig. 6b, bei der die Aktoren 72a und 72b und die Aktoren 57a und 57b eine vertauschte Anordnung der Spulen und Magnete in den Tauchspulenantrieben aufweisen. So kann zumindest einer der Aktoren 57a, 57b oder 72a-d so ausgeführt sein, dass, wie dargestellt, ein Magnet mit dem beweglichen Objekt, der Strahlumlenkeinrichtung 18 oder dem einzeiligen Array 14 verbunden ist, während die Spulen 75 ortsfest angeordnet sind. Hierdurch kann insbesondere bei elektrisch erhaltenen Magnetkräften eine elektrische Beaufschlagung der Spulen ortsfest erfolgen, so dass eine Übertragung von elektrischer Energie auf bewegliche Komponenten vermieden werden kann, was vorteilhaft ist.

In anderen Worten können die Aktoren so angeordnet sein, dass Antriebe für Autofokus und/oder optische Bildstabilisierung direkt am Optikarray angreifen. Spulen und Magnete können beliebig mit einander vertauscht werden. Federelemente können angeordnet sein, um eine Führung und/oder Rückstellung der beweglichen Komponenten zu ermöglichen. Die Federelemente können an einer fixen Aufhängung angeordnet sein.

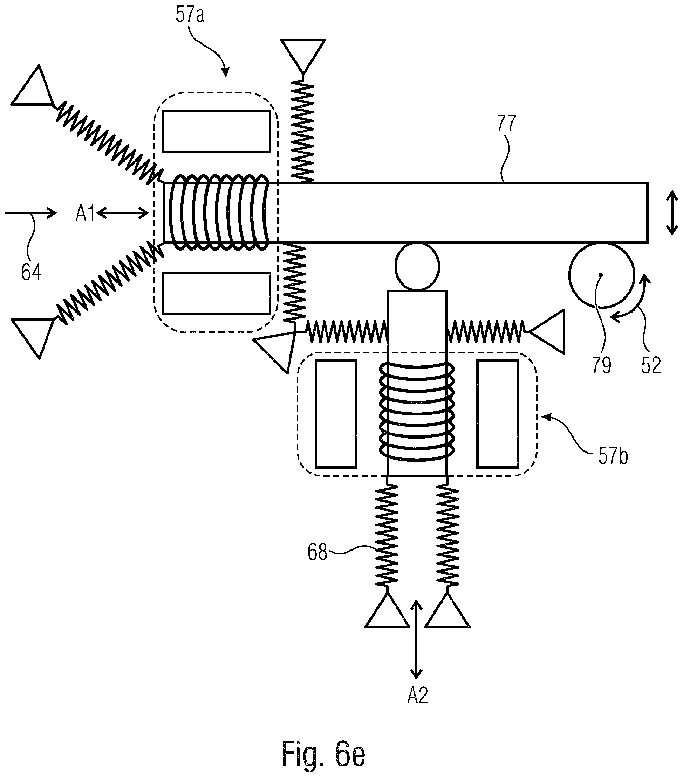

Fig. 6e zeigt eine schematische Seitenschnittansicht eines Antriebs, wie er bspw. für den Erhalt einer Rotationsbewegung der Strahlumlenkeinrichtung 18 angeordnet werden kann, etwa der Rotationsbewegung 52.

Der Antrieb kann zwei Aktoren 57a und 57b umfassen, die bspw. als Tauchspulenantriebe gebildet sind, aber unabhängig voneinander auch ein oder mehrere beliebige andere Aktorprinzipien umsetzen können. Der Aktor 57a ist bspw. ausgebildet, um eine Linearbewegung A1 zu erzeugen. Die Linearbewegung A1 kann parallel oder antiparallel zur Richtung 64 angeordnet sein. Der Aktor 57b ist bspw. ausgebildet, um eine Linearbewegung A2 zu erzeugen, die eine Richtungskomponente aufweist, die senkrecht zu der Linearbewegung A1 im Raum angeordnet ist oder insgesamt senkrecht hierzu angeordnet ist. Zusätzlich kann die Linearbewegung senkrecht zur Zeilenerstreckungsrichtung 24 im Raum angeordnet sein. Ein bewegliches Element 77 des Aktors 57a, etwa ein Ausleger oder Stößel, kann mit einer Drehachse 79 der Strahlumlenkeinrichtung verbunden sein. Der Aktor 57b kann ausgebildet sein, um eine Kraftkopplung mit dem beweglichen Element 77 bereitzustellen, etwa eine mechanische oder magnetische Kopplung. So kann basierend auf der Linearbewegung A2 eine Richtung, entlang der die Linearbewegung A1 das bewegliche Element 77 bewegt beeinflusst werden. Dies kann nutzbar sein, um eine Kraftkopplung, etwa durch mechanischen Kontakt, zwischen dem beweglichen Element 77 und der Drehachse 79 herzustellen oder zu lösen.

So kann bspw. basierend auf einer Kraftkopplung zwischen dem beweglichen Element 77 und der Drehachse 79 und der Linearbewegung A1 entlang einer positiven Richtung 64 die Rotationsbewegung 52 entlang dem Uhrzeigersinn erhalten werden. Eine Linearbewegung A1 entlang der negativen Richtung 64 kann zu einer Rotationsbewegung 52 entgegen dem Uhrzeigersinn führen. Ist trotz vollem Stellweg des Aktors 57a eine weitere Rotationsbewegung 52 in eine der Richtungen gewünscht, so kann nach Lösen der Kraftkopplung zwischen dem beweglichen Element 77 und der Drehachse 79 mit der Linearbewegung A2 der Aktor zurückbewegt werden, ohne dass hierbei eine Aktorkraft auf die Strahlumlenkeinrichtung ausgeübt wird. Danach kann die Kraftkopplung zwischen dem beweglichen Element 77 und der Drehachse 79 wieder hergestellt werden, etwa durch eine Linearbewegung A2 in die andere Richtung. Dies kann auch durch rückstellende Federelemente 68 erhalten werden. Anschließend kann der Aktor 57a erneut bewegt werden, so dass eine weitere Rotationsbewegung der Strahlumlenkeinrichtung über die Drehachse 79 erfolgt.

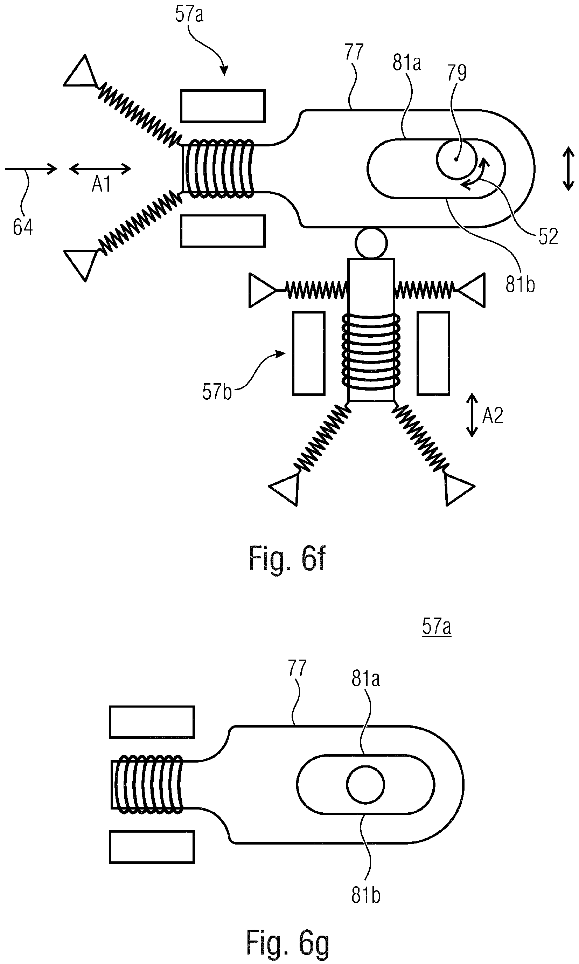

Fig. 6f zeigt eine schematische Seitenschnittansicht des Aktorkonzepts aus Fig. 6d, bei dem das bewegliche Element 77 als beidseitig mit der Drehachse 79 kontaktierbar ausgeführt ist, etwa als Gabel oder Rahmen, so dass zwei gegenüberliegende Seiten 81a und 81b des beweglichen Elements 77 wechselweise, d. h. höchstens eine der beiden Seiten 81a oder 81b während der Rotationsbewegung 52 mit der Drehachse 79 in Kraftkopplung stehen. So kann bspw. die Linearbewegung A1 entlang der positiven Richtung 64 bei Kontakt mit der Seite 81a und ferner eine Linearbewegung A1 entlang der negativen Richtung 64 bei Kontakt mit der Seite 81b die Rotationsbewegung 52 im Uhrzeigersinn ermöglichen. Alternativ oder zusätzlich kann die Linearbewegung A1 entlang der negativen Richtung 64 bei Kontakt mit der Seite 81a und ferner die Linearbewegung A1 entlang der positive Richtung 64 bei Kontakt mit der Seite 81b die Rotationsbewegung 52 im entgegen dem Uhrzeigersinn ermöglichen. Eine Umschaltung zwischen der Seite 81a oder 81b, die mit der Drehachse 79 in Kontakt oder Kraftkopplung steht, kann mittels des Aktors 57b bzw. der Linearbewegung A2 erfolgen. Dies ermöglicht eine Nutzung des Stellwegs des Aktors 57a in beiden Richtungen der Linearbewegung A1. Verglichen mit dem Konzept der Fig. 6e kann somit ein höherer Anteil des Verfahrweges des Aktors 57a für die Rotationsbewegung 52 nutzbar sein, was zu einer schnelleren Rotationsbewegung und/oder geringerem Energieverbrauch führen kann.

Fig. 6g zeigt eine schematische Ansicht einer Position des beweglichen Elements 77, bei der weder die Seite 81a noch die Seite 81b in Kontakt mit der Drehachse 79 stehen, etwa da basierend auf der Linearbewegung A2 eine Kraftkopplung mit der einen Seite gelöst und eine Kraftkopplung mit der anderen Seite noch nicht hergestellt ist.

Obwohl die Fig. 6f und 6g so dargestellt sind, dass zwei gegenüberliegende Seiten mit der Drehachse in Kraftkopplung treten können, kann es sich auch um zwei benachbarte Seiten handeln. Obwohl die Fig. 6f und 6g so dargestellt sind, dass die Seiten 81a und 81b entlang eines horizontalen Verfahrweges gegenüberliegend angeordnet sind, so kann zumindest eine der Seiten 81a und/oder 81b auch entlang einer vertikalen Richtung angeordnet sein. Bspw. kann die Position der Aktoren 57a und 57b auch wechselseitig vertauscht sein.

In Kombination mit der Strahlumlenkeinrichtung 18 kann mit einem derartigen Aktor ein großer und praktisch nicht begrenzter Stellwinkel erzielt werden, um eine Umschaltung der Blickrichtung der Multiaperturabbildungsvorrichtung zu erreichen. Ferner kann dieselbe Aktoreinheit für die Bereitstellung der erforderlichen Drehbewegung der Strahlumlenkeinheit 18 zur Erzielung der Bildstabilisierung entlang der Richtung 58 genutzt werden, wobei geringere Drehwinkel als für die Umschaltung der Blickrichtung der Multiaperturabbildungsvorrichtung benötigt werden und die hierfür erforderliche Bewegung zum Beispiel allein aus dem Wirken des Aktor 57a entlang der Richtung A1 basiert.

Ferner kann die Kopplungsstelle zwischen beweglichem Element 77 und der Drehachse 79 so ausgelegt sein, dass bei Berührung der beiden Komponenten und ohne Vorhandensein einer Bewegung entlang der Richtung A1 eine weitere Drehbewegung vermieden wird. Mit anderen Worten dient die Koppelstelle zwischen beweglichem Element 77 und der Drehachse 79 im Fall der Nichtaktuierung des Aktors 57a zur Fixierung des Orientierungswinkels der Drehachse 79 und hat damit die Wirkung einer Feststellbremse.

In einer Ausführungsform liegt eine mechanische Kopplung des beweglichen Elements 77 und der Drehachse 79 für den Fall der Nichtaktuierung des Aktors 57b vor. Mit anderen Worten liegt die Kopplung vor, wenn der Aktor 57b ausgeschaltet ist. Die Wirkung als Feststellbremse wird daher vorteilhafterweise erzielt, wenn der Aktor 57b ausgeschaltet ist, was einen geringeren Energieverbrauch zur Folge hat. Zum Aufbringen einer zur Erzielung der mechanischen Kopplung erforderlichen Kraft können beispielsweise die Federelemente 68 genutzt werden.

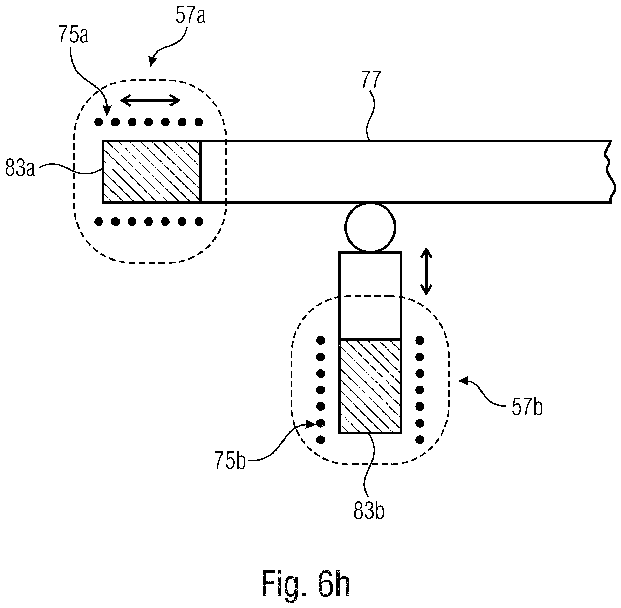

Wie es in Fig. 6h angedeutet ist, kann bei zumindest einem der Aktoren 57a oder 57b auch die Anordnung der Magnete oder Spulen vertauscht sein, so dass die Magnete 83a und/oder 83b beweglich und die Spulen 75a und/oder 75b der Aktoren 57a bzw. 57b ortsfest angeordnet sind.

In anderen Worten kann ein Aktor auch als Kombination von Linearantrieben ausgeführt sein, von denen einer, etwa der Aktor 57a, ausgebildet ist, um einen Vorschub eines beweglichen Elements bereitzustellen und der andere Antrieb eine variable Kopplung zwischen dem beweglichen Element und der Drehachse des angetriebenen Elements. Der Ausleger bzw. das bewegliche Element kann eine Kippbewegung oder eine reine Translationsbewegung senkrecht zur Vorschubrichtung ausführen.

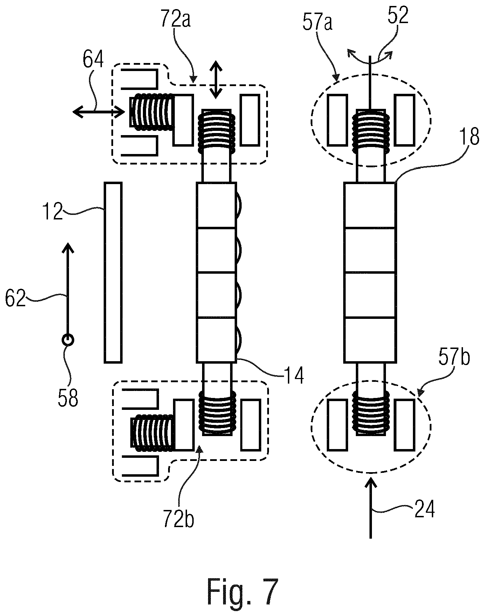

Fig. 7 zeigt eine schematische Aufsicht auf den Bildsensor 12, das einzeilige Array 14 und die Strahlumlenkeinrichtung 18, bei denen eine Funktionsweise der Aktoren 66a und 56a bzw. 66b und 56b aus den Fig. 5 und 6a-h kombiniert ist. Das kann auch so verstanden werden, dass Aktoren 66a und 56a bzw. 66b und 56b gestapelt angeordnet ist. Das einzeilige Array kann mit Aktoren 72a und 72b verbunden sein, die entlang der Zeilenerstreckungsrichtung 24, beispielsweise an Endpositionen des einzeiligen Arrays 14, mit dem einzeiligen Array 14 verbunden sind. Die Aktoren 72a und/oder 72b können ausgebildet sein, um das einzeilige Array 14 entlang der Zeilenerstreckungsrichtung 24 (d.h. parallel und/oder antiparallel hierzu) und entlang der Richtung 64 zu bewegen. Der Stößel eines ersten Tauchspulenantriebs kann beispielsweise einen Anker eines zweiten Tauchspulenantriebs zumindest teilweise umfassen. Die Aktoren 72a und 72b können somit eine Autofokusfunktion oder eine Fokusfunktion sowie eine Bildstabilisierung entlang der Zeilenerstreckungsrichtung 24 und/oder der Bildachse 62 ermöglichen. Die Aktoren 57a und 57b können eine optische Bildstabilisierung entlang der Bildachse 58 ermöglichen. Obwohl gemäß dem Ausführungsbeispiel in Fig. 7 zwei Aktoren 72a und 72b an dem einzeiligen Array 14 und zwei Aktoren 57a und 57b an der Strahlumlenkeinrichtung 18 angeordnet sind, können jeweils ein Aktor 72a oder 72b bzw. ein Aktor 57a oder 57b angeordnet sein. Beispielsweise können freie Enden des einzeiligen Arrays 14 bzw. der Strahlumlenkeinrichtung 18 bewegbar gelagert sein. Alternativ können auch mehr als zwei Aktoren angeordnet sein. Die Aufbauten können zusätzlich Konstruktionselemente zur Bewegungsführung, wie Gleit-, Roll- oder Federlager sowie federnde Elemente zur Aufbringung von Gegenkräften zu den von den Aktoren erzeugten Kräften aufweisen.

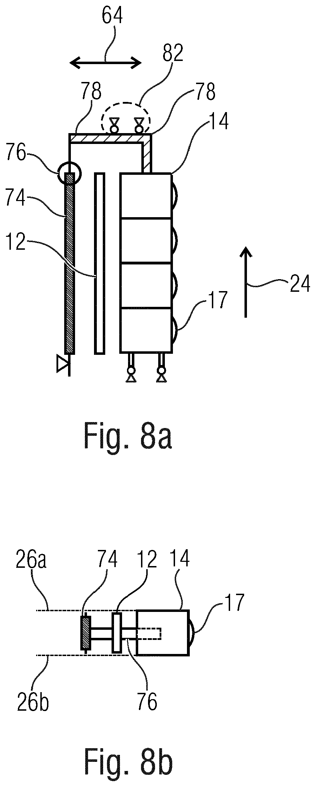

Fig. 8a zeigt eine schematische Aufsicht auf den Bildsensor 12 und das einzeilige Array 14, das erfindungsgemäß basierend auf einem piezoelektrischen Aktor 74 entlang der Richtung 64 translatorisch bewegt wird. Der Aktor 74 ist Teil der Aktoreinrichtung 28 und an einer dem einzeiligen Array 14 abgewandten Seite des Bildsensors 12 angeordnet Das bedeutet, dass der Bildsensor 12 zwischen dem Aktor 74 und dem einzeiligen Array 14 angeordnet ist. Der Aktor ist ausgebildet, um sich entlang oder entgegengesetzt zur Richtung 64 zu verformen. Der Aktor 74 ist als piezoelektrischer Biegeaktor gebildet und ausgebildet um ein (ggf. nicht eingespanntes) Ende 76 entlang oder entgegengesetzt zu der Richtung 64 zu bewegen. Alternativ oder zusätzlich zu dem Ende 76 (Endbereich) kann ein anderer Bereich des Aktors 74 entlang einer Strahlrichtung parallel zu einem Strahlengang durch die optischen Kanäle bewegt werden, wenn sich der Aktor 74 verformt.

Zwischen dem Aktor 74 und dem einzeiligen Array 14 ist eine mechanische Umlenkeinrichtung 78 angeordnet, die die Bewegung des piezoelektrischen Aktors 74 auf das einzeilige Array 14 überträgt, so dass dieses entlang der Richtung 64 oder entgegengesetzt hierzu translatorisch bewegt wird, um einen optischen Fokus der Multiaperturabbildungsvorrichtung zu verändern. Die mechanische Umlenkeinrichtung 78 und/oder das einzeilige Array 14 sind über eine Lagerung 82 gelagert dass Bewegungsfreiheitsgrade des einzeiligen Arrays 14 durch eine Auslenkung des Aktors 74 auf die Richtung 64 oder eine antiparallele Richtung hierzu beschränkt werden. Der Aktor 74 ist ein Biegeaktor, der ausgebildet ist, um sich bei einer Aktuierung entlang einer Strahlrichtung parallel zu einem Strahlengang durch die optischen Kanäle zu verformen. Dies ermöglicht eine hohe Präzision der Fokusfunktion und die Erzielung großer Bewegungsgeschwindigkeiten. Vorteilhaft an piezoelektrischen Aktoren ist, dass eine Anordnung der Multiaperturabbildungsvorrichtung 10 in einem flachen Gehäuse ermöglicht ist, beispielsweise in einem Mobiltelefon, wie etwa einem Smartphone.

Eine Ausdehnung des Aktors 74 entlang der Zeilenerstreckungsrichtung kann beispielsweise in einem Bereich von zumindest 1 mm und höchstens 100 mm, von zumindest 2 mm und höchstens 50 mm oder von zumindest 7 mm und höchstens 25 mm, beispielsweise in etwa 15 mm liegen. Ein Umfang einer translatorischen Bewegung des einzeiligen Arrays und/oder des Bildsensors entlang der Zeilenerstreckungsrichtung zur optischen Bildstabilisierung kann beispielsweise in einem Bereich von zumindest 10 µm und höchstens 2000 µm, von zumindest 20 µm und höchstens 1000 µm oder von zumindest 50 µm und höchstens 500 µm, beispielsweise in etwa 300 µm liegen. Die Aufbauten können weiterhin Konstruktionselemente zur Bewegungsführung, wie Gleit-, Roll- oder Federlager sowie federnde Elemente zur Aufbringung von Gegenkräften zu den von Aktoren erzeugten Kräften aufweisen.

Fig. 8b zeigt eine schematische Seitenansicht des Bildsensors 12 und des einzeiligen Arrays 14 aus Fig. 8a. Der Aktor 74 der Aktoreinrichtung ist vollständig zwischen den Ebenen 26a und 26b angeordnet.

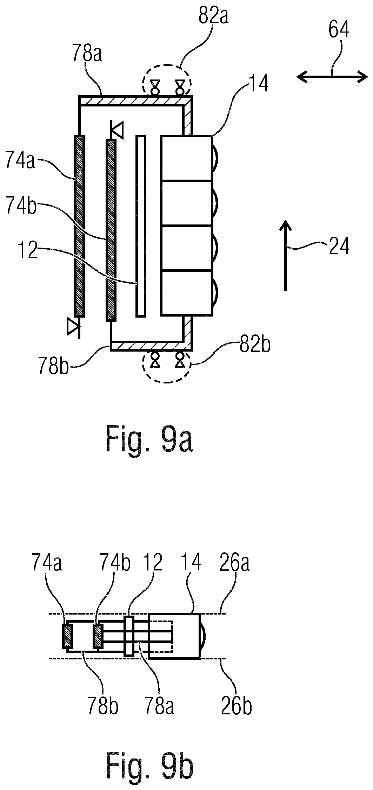

Fig. 9a zeigt eine schematische Aufsicht auf den Bildsensor und das einzeilige Array, wobei das einzeilige Array 14 verglichen mit der Fig. 8a mit zwei piezoelektrischen Aktoren 74a und 74b verbunden ist. Zwischen dem einzeiligen Array 14 und dem piezoelektrischen Aktor 74a kann die mechanische Umlenkeinrichtung 78a angeordnet sein, wie es im Zusammenhang mit der mechanischen Umlenkeinrichtung 78 der Fig. 8a beschrieben ist. In vergleichbarer Weise kann der piezoelektrische Aktor 74b über die mechanische Umlenkeinrichtung 78b mit dem einzeiligen Array 14 verbunden sein. Vereinfacht ausgedrückt, kann der Abstand zwischen dem Bildsensor 12 und dem einzeiligen Array auf einer einseitigen (Fig. 8a) oder beidseitigen (Fig. 9a) Aktuierung des einzeiligen Arrays 14 erfolgen.

Fig. 9b zeigt eine schematische Seitenansicht des Bildsensors 12 und des einzeiligen Arrays 14 aus Fig. 9a. Die Aktoren 74a/b der Aktoreinrichtung sind bspw. vollständig zwischen den Ebenen 26a und 26b angeordnet.

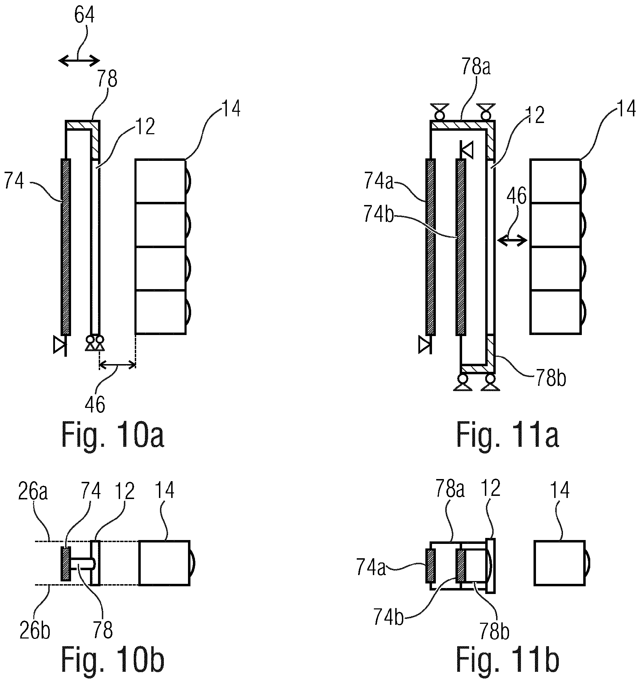

Fig. 10a zeigt eine schematische Aufsicht auf den Bildsensor 12 und das einzeilige Array 14, wobei die Änderung des Abstands 46 für die Fokusfunktion basierend auf einer Bewegung des Bildsensors 12 entlang oder entgegengesetzt zu der Richtung 64 ermöglicht ist. Ein Aktor, beispielsweise der piezoelektrische Aktor 74, kann direkt oder mittelbar, beispielsweise über die mechanische Umlenkeinrichtung 78, mit dem Bildsensor 12 verbunden sein und ausgebildet sein, um den Bildsensor 12 bei einer Aktuierung entlang der Richtung 64 oder entgegengesetzt hierzu zu verschieben. Da für die Fokussierung der optischen Kanäle der Abstand 46 eine wesentliche Rolle spielen kann, kann es für die Fokusfunktion keinen oder einen nebengeordneten Einfluss haben, ob der Bildsensor 12 oder das einzeilige Array 14 bewegt wird, um den Abstand 46 zu verändern. Es kann vorteilhaft sein, das einzeilige Array 14 zu bewegen, um eine mechanische Beanspruchung von elektrischen Kontaktierungen des Bildsensors 12 gering zu halten. Die Aufbauten können weiterhin Konstruktionselemente zur Bewegungsführung, wie Gleit-, Roll- oder Federlager sowie federnde Elemente zur Aufbringung von Gegenkräften zu den von Aktoren erzeugten Kräften aufweisen.

Fig. 10b zeigt eine schematische Seitenansicht des Bildsensors 12 und des einzeiligen Arrays 14 aus Fig. 10a. Der piezoelektrische Aktor ist zwischen den Ebenen 26a und 26b angeordnet.

Fig. 11a zeigt eine schematische Aufsicht auf den Bildsensor 12 und das einzeilige Array 14, wobei zwei piezoelektrische Aktoren 74a und 74b mit dem Bildsensor 12 verbunden sind, und ausgebildet sind, um den Abstand 46 zwischen dem Bildsensor 12 und dem einzeiligen Array 14 zu verändern. Die Relativbewegungen der Konfigurationen der Fig. 10a, 10b, 11a und 11b können auch ohne die Lagerungen der mechanischen Umlenkeinrichtungen ausgeführt sein, da eine symmetrische Krafteinleitung an die bewegte Komponente erfolgen kann. Bei vergleichbaren Hüben der Aktoren 74a und 74b kann ein Verkippen des einzeiligen Arrays 14 oder des Bildsensors 12 vermieden werden. Die Aufbauten können weiterhin Konstruktionselemente zur Bewegungsführung, wie Gleit-, Roll- oder Federlager sowie federnde Elemente zur Aufbringung von Gegenkräften zu den von Aktoren erzeugten Kräften aufweisen.

Fig. 11b zeigt eine schematische Seitenansicht der Anordnung von Bildsensor und einzeiligem Array aus Fig. 11a.

Obwohl die Aktoren der Fig. 8a, 8b, 9a, 9b, 10a, 10b, 11a und 11b so dargestellt sind, dass der Bildsensor 12 zwischen dem einzeiligen Array 14 und den Aktoren 74 bzw. 74a und 74b angeordnet ist, kann beispielsweise zumindest einer der Aktoren an einer dem einzeiligen Array 14 abgewandten Seite der Strahlumlenkeinrichtung angeordnet sein, so dass die Strahlumlenkeinrichtung 18 zwischen dem Aktor und dem einzeiligen Array 14 angeordnet ist. Das bedeutet, dass der Bildsensor 12 oder die Strahlumlenkeinrichtung 18 zwischen einem Aktor 74 der Aktoreinrichtung und dem einzeiligen Array 14 angeordnet sein kann. Der Aktor 74 kann ausgebildet sein, um den Abstand 46 zwischen dem Bildsensor 12 und dem einzeiligen Array 14 zu verändern.

Die mechanischen Umlenkeinrichtungen 78 bzw. 78a und 78b können eine hohe Steifigkeit aufweisend ausgebildet sein und beispielsweise als Starrkörper angenommen werden.

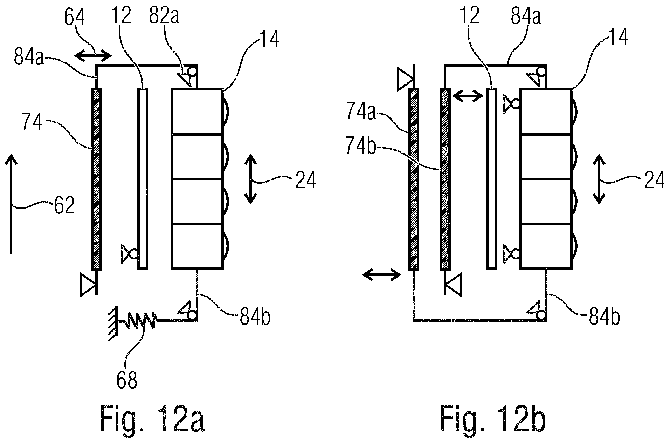

Fig. 12a zeigt eine schematische Aufsicht auf den Bildsensor 12 und das einzeilige Array 14, wobei verglichen mit der Darstellung in Fig. 8a eine flexible mechanische Verbindung zwischen dem piezoelektrischen Aktor 74 und dem einzeiligen Array 14 angeordnet ist. Die Bewegungsrichtung des Aktors kann basierend auf der Lagerung 82a umgelenkt werden. Die flexible mechanische Verbindung 84a kann beispielsweise ein flexibles Band, eine Drahtstruktur oder dergleichen sein, wobei die Lagerung 82a ausgebildet ist, um die Bewegung des Aktors 74 entlang der Richtung 64 so umzulenken, dass eine translatorische Bewegung des einzeiligen Array 14 entlang der Zeilenerstreckungsrichtung 24 ermöglicht ist. An einer dem flexiblen mechanischen Umlenkelement 84a gegenüberliegend angeordneten Seite des einzeiligen Arrays 14 kann eine weiteres Umlenkelement 84b angeordnet sein, das zwischen dem Rückstellelement 68 und dem einzeiligen Array 14 angeordnet ist. Basierend auf dem Rückstellelement 68 kann beispielsweise bei einer Wegnahme der Aktuierung des piezoelektrischen Aktors 74 das einzeilige Array 14 wieder in die vordefinierte Position gebracht werden. Im Vergleich zu der Fig. 8a kann die Anordnung des Aktors zur translatorischen Bewegung des einzeiligen Arrays 14 entlang der Zeilenerstreckungsrichtung 24 für eine optische Bildstabilisierung entlang der Bildachse 62 nutzbar sein.

Bei der vordefinierten Position kann es sich beispielsweise um eine minimale Auslenkung des Aktors 74 und/oder einzeiligen Arrays 14 handeln, die basierend auf der Aktuierung des Aktors 74 hin zu einem höheren Wert, beispielsweise einem Maximum verändert wird.

Fig. 12b zeigt eine mit Fig. 12a vergleichbare Anordnung des Bildsensors und des einzeiligen Arrays 14, wobei der Aktor 74a und der Aktor 74b über die mechanischen Umlenkeinrichtungen 84a bzw. 84b mit zwei Seiten des einzeiligen Arrays 14 verbunden sein können, um ein Hin- und Herbewegen des einzeiligen Arrays 14 entlang der Zeilenerstreckungsrichtung 24 zu ermöglichen.

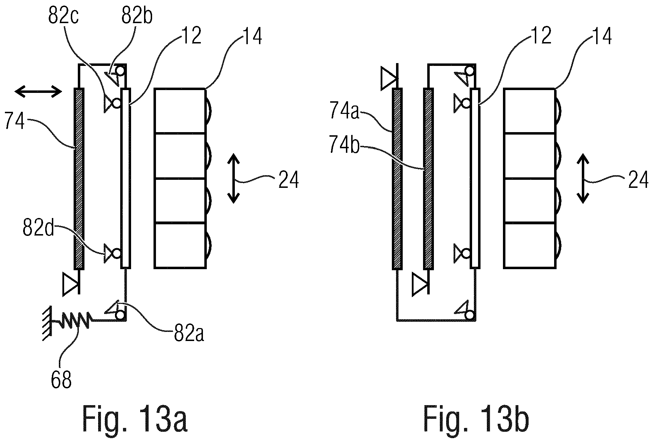

Fig. 13a zeigt eine schematische Aufsicht des Bildsensors 12 und des einzeiligen Arrays 14, bei dem das Konzept zur optischen Bildstabilisierung gemäß der Fig. 12a dahin gehend modifiziert ist, dass der Bildsensor 12 gegenüber dem einzeiligen Array 14 entlang der Zeilenerstreckungsrichtung 24 relativ bewegt wird. Basierend auf Lagerungen 82a-d kann eine Bewegung des Bildsensors 12 auf die translatorische Bewegung entlang der Zeilenerstreckungsrichtung 24 beschränkt werden.

Fig. 13b zeigt eine schematische Aufsicht auf den Bildsensor 12 und das einzeilige Array 14, wobei das Konzept zum Erhalten einer optischen Bildstabilisierung, wie es im Zusammenhang mit der Fig. 12b beschrieben ist, dahin gehend modifiziert ist, dass basierend auf der Aktuierung der Aktoren 74a und 74b eine Bewegung des Bildsensors 12 gegenüber dem einzeiligen Array 14 entlang der Zeilenerstreckungsrichtung 24 erhalten wird. Das bedeutet, dass die Aktoreinrichtung zwei Aktoren aufweisen kann, wobei zumindest einer der Aktoren als Biegeaktor gebildet sein kann. Der Aktor kann ausgebildet sein, um einen Abstand zwischen dem Bildsensor 12 und dem einzeiligen Array 14 zu verändern und um sich bei einer Aktuierung entlang einer Strahlrichtung parallel zu einem Strahlengang durch die optischen Kanäle zu verformen. Der erste Aktor 74a und der zweite Aktor 74b können mit unterschiedlichen Bereichen, Enden und/oder Endbereichen des einzeiligen Arrays 14 entlang der Zeilenerstreckungsrichtung 24 verbunden sein.

Es wird deutlich, dass die Aktuierungsprinzipien ohne Einschränkungen miteinander kombinierbar sind. Insbesondere kann beispielsweise eine Bildstabilisierung durch Bewegung des Bildsensors 12 gegenüber dem einzeiligen Array 14 und/oder eine Änderung des Fokus basierend auf einer Bewegung des einzeiligen Arrays 14 gegenüber dem Bildsensor 12 erhalten werden. Gemäß weiteren Ausführungsbeispielen sind die Prinzipien zur Erzeugung der Relativbewegung von Komponenten untereinander wechselseitig vertauschbar. Gemäß weiteren Ausführungsbeispielen kann auch lediglich eine Komponente bezüglich einer anderen Komponente bewegt werden, beispielsweise das einzeilige Array 14 gegenüber dem Bildsensor 12 oder anders herum, um sowohl die Bildstabilisierung entlang der Bildachse 62 als auch die Änderung des Fokus zu erhalten.

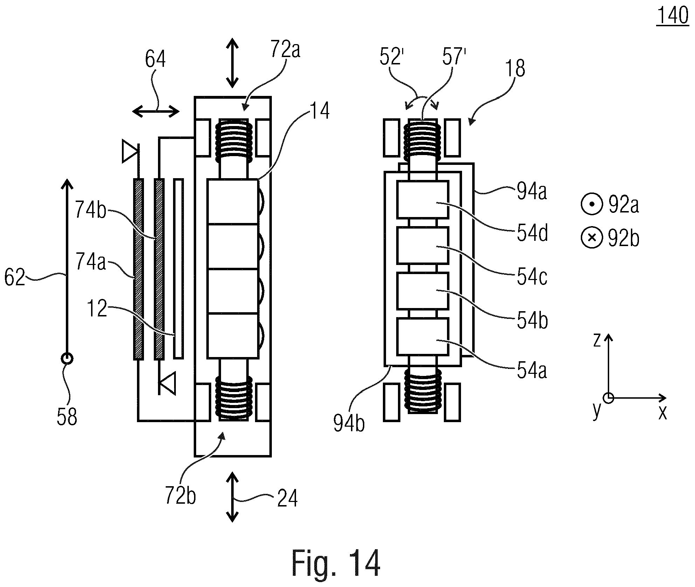

Fig. 14 zeigt eine schematische Aufsicht auf eine Multiaperturabbildungsvorrichtung 140 gemäß einem Ausführungsbeispiel. Die Aktoren 74a und 74b sind ausgebildet, um das einzeilige Array 14 entlang oder entgegengesetzt zu der Richtung 64 zu bewegen, wie es im Zusammenhang mit Fig. 9a beschrieben ist. An dem einzeiligen Array sind Tauchspulenantriebe 72a und 72b angeordnet, die ausgebildet sind, um das einzeilige Array 14 entlang der Zeilenerstreckungsrichtung 24 oder entgegengesetzt hierzu zu verschieben, wie es im Zusammenhang mit der Fig. 7 beschrieben ist.

Ein Aktor 57' ist mit der Strahlumlenkeinrichtung 18 verbunden und ausgebildet, um eine rotatorische Bewegung 52' zu erzeugen. Die rotatorische Bewegung 52' kann die rotatorische Bewegung 52, wie sie im Zusammenhang mit der Fig. 7 beschrieben ist, umfassen und für eine optische Bildstabilisierung entlang der Bildachse 58 nutzbar sein. Alternativ oder zusätzlich kann der Aktor 57' ausgebildet sein, um die rotatorische Bewegung 52' so zu erzeugen, dass eine Blickrichtung der Multiaperturabbildungsvorrichtung 140, entlang derer die Strahlengänge der optischen Kanäle umgelenkt werden, einfach stabil, bistabil oder mehrfach stabil entlang einer ersten Blickrichtung 92a und/oder einer zweiten Blickrichtung 92b umgelenkt wird. Die erste Blickrichtung 92a und/oder die zweite Blickrichtung 92b können parallel und/oder antiparallel zu einer y-Richtung angeordnet sein. Beispielsweise können die Blickrichtungen 92a und/oder 92b im Wesentlichen senkrecht zu der Zeilenerstreckungsrichtung 24 und zu einem Verlauf der optischen Kanäle zwischen dem Bildsensor 12 und der Strahlumlenkeinrichtung 18 angeordnet sein. Die Blickrichtungen können auf einer Ausrichtung der Strahlumlenkeinrichtung gegenüber den Strahlengängen beliebig im Raum verlaufen.

Die Strahlengänge der optischen Kanäle können transparente Bereiche 94a bzw. 94b eines Gehäuses, in dem die Multiaperturabbildungsvorrichtung 140 angeordnet ist, austreten, um ein Gesamtgesichtsfeld oder Teilgesichtsfeld zu erfassen. Die rotatorische Bewegung 52 kann der einfachen stabilen, bistabilen oder mehrfach stabilen Position der Strahlumlenkeinrichtung 18 überlagerbar sein, um die rotatorische Bewegung 52' zu erhalten. Dies kann auch so verstanden werden, dass eine positionsdiskrete Position der Strahlumlenkeinrichtung 18 zum Erzeugen einer Blickrichtung der optischen Kanäle mit einer analogen Bewegung zur optischen Bildstabilisierung überlagerbar ist. Obwohl die Multiaperturabbildungsvorrichtung 140 so beschrieben ist, dass diese zwei Blickrichtungen 92a und 92b aufweist, kann die Multiaperturabbildungsvorrichtung 140 auch zumindest eine dritte Blickrichtung aufweisen, die von einem Auslenkwinkel der Strahlumlenkeinrichtung 18 beeinflusst ist. Das bedeutet, dass die Strahlumlenkeinrichtung 18 ausgebildet sein kann, um den Strahlengang der optischen Kanäle zumindest in eine erste Blickrichtung 92a und eine zweite Blickrichtung 92b abzulenken. Die Aktoreinrichtung kann zumindest einen Aktor umfassen, etwa den Aktor 57', der ausgebildet ist, um die Strahlumlenkeinrichtung rotatorisch zu bewegen. Der Aktor 57'a kann in einer Ebene der Strahlumlenkeinrichtung angeordnet sein, die senkrecht zu der ersten oder zweiten Blickrichtung angeordnet ist, beispielsweise zumindest teilweise in einem Bereich zwischen den Ebenen 26a und 26b. Die Strahlumlenkeinrichtung 18 kann beispielsweise die Strahlumlenkelemente (Facetten) 54a-d umfassen.

In einem Bereich der transparenten Bereiche 94a und/oder 94b können schaltbare Blenden angeordnet sein. Die Blenden können bspw. als mechanische oder elektrochrome Blenden sein. Die Blenden können so angesteuert werden, dass sie die transparenten Bereiche 94a und/oder 94b zumindest teilweise optisch verschließen, wenn keine Erfassung eines Gesamtgesichtsfeldes durch den jeweiligen transparenten Bereich 94a oder 94b erfolgt.

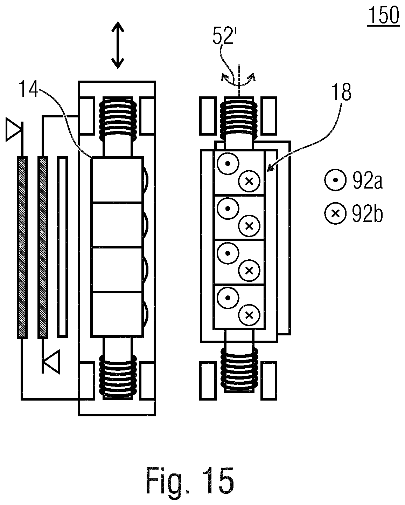

Fig. 15 zeigt eine schematische Aufsicht auf eine Multiaperturabbildungsvorrichtung 150, die verglichen mit der Multiaperturabbildungsvorrichtung 140 dahin gehend modifiziert ist, dass die Strahlumlenkeinrichtung 18 als ebene reflektierende Fläche gebildet ist. Beispielsweise ist die Strahlumlenkeinrichtung 18 so gebildet, dass sie eine erste Hauptseite und eine zweite Hauptseite (beispielsweise eine Vorderseite und eine Rückseite) aufweist, die jeweils reflektierend gebildet ist. Basierend auf einer Verkippung der Strahlumlenkeinrichtung 18 so, dass die erste Hauptseite der Strahlumlenkeinrichtung 18 dem einzeiligen Array 14 unter einem Winkel zugewandt angeordnet ist, kann beispielsweise die erste Blickrichtung 92a erhalten werden. Wird basierend auf der Rotationsbewegung 52' die Strahlumlenkeinrichtung 18 so bewegt, dass die zweite Hauptseite unter einem Winkel der Strahlumlenkeinrichtung 18 zugewandt angeordnet ist, kann die zweite Blickrichtung 92b erhalten werden. Die Strahlumlenkeinrichtung 18 kann eben oder gekrümmt ausgebildet sein. Eine Krümmung der Strahlumlenkeinrichtung 18 kann eine Ablenkung der Strahlengänge der optischen Kanäle entlang voneinander verschiedener Richtungen zu unterschiedlichen Teilgesichtsfeldern des Gesamtgesichtsfeldes ermöglichen. Ist die Strahlumlenkeinrichtung 18 eben ausgebildet, kann eine Umlenkung der Strahlengänge der optischen Kanäle basierend auf den Optiken des einzeiligen Arrays 14 erhalten werden.

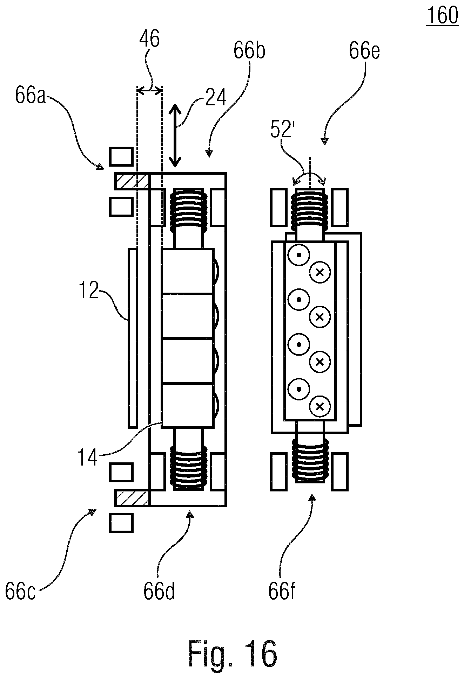

Fig. 16 zeigt eine schematische Aufsicht auf eine Multiaperturabbildungsvorrichtung 160. Die Aktoreinrichtung umfasst Tauchspulenantriebe 66a und 66c, die mit dem einzeiligen Array 14 verbunden sind, und die ausgebildet sind, um den Abstand 46 zwischen dem Bildsensor 12 und dem einzeiligen Array 14 zu verändern. Die Multiaperturabbildungsvorrichtung 160 bzw. die Aktoreinrichtung umfasst Tauchspulenantriebe 66b und 66d, die mit dem einzeiligen Array 14 verbunden sind und die ausgebildet sind, um das einzeilige Array 14 entlang der Zeilenerstreckungsrichtung 24 zu bewegen. Die Aktoreinrichtung umfasst ferner Tauchspulenantriebe 66e und 66f, die ausgebildet sind, um die rotatorische Bewegung 52' zu erzeugen.

In anderen Worten kann die Aktoreinrichtung einen Tauchspulenmotor umfassen, der ausgebildet ist, um eine Relativposition des Bildsensors 12 bezüglich des einzeiligen Arrays 14 in einer Ebene parallel zu der Zeilenerstreckungsrichtung 24 und parallel zu dem Bildsensor zu verändern, beispielsweise die Tauchspulenmotoren 66b und 66d.

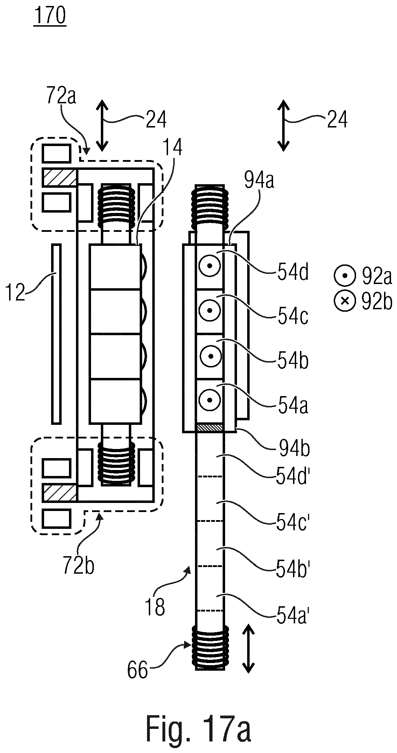

Fig. 17a zeigt eine schematische Aufsicht auf eine Multiaperturabbildungsvorrichtung 170, bei der die Strahlumlenkeinrichtung 18 eine Anzahl von Strahlumlenkelementen 54a-d und 54a'-54d' umfasst, die einer Anzahl der optischen Kanäle multipliziert mit einer Anzahl der Blickrichtungen entsprechen kann. Basierend auf einer Anordnung der Strahlumlenkelemente 54a-d vor dem einzeiligen Array 14 können die Strahlengänge der optischen Kanäle entlang der Blickrichtung 92a umlenkbar sein. Ein Tauchspulenaktor 66 der Aktoreinrichtung kann ausgebildet sein, um die Strahlumlenkeinrichtung 18 entlang oder entgegengesetzt zu der Zeilenerstreckungsrichtung 24 relativ zu dem einzeiligen Array 14 zu bewegen.

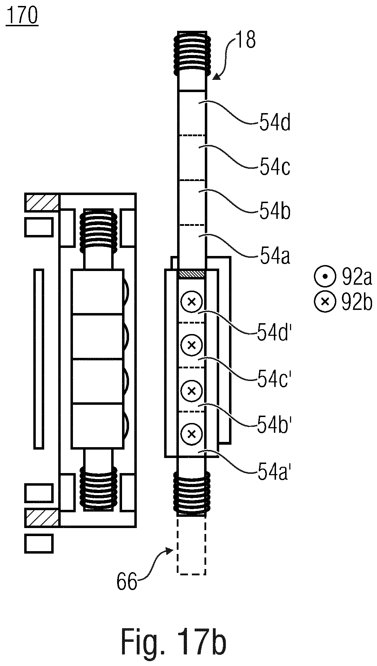

Fig. 17b zeigt eine schematische Aufsicht auf die Multiaperturabbildungsvorrichtung 170, bei der die Strahlumlenkeinrichtung 18 eine zweite Position aufweist, so dass die Strahlumlenkelemente 54a'-54d' die Strahlengänge der optischen Kanäle so umlenken dass die Multiaperturabbildungsvorrichtung 170 die zweite Blickrichtung 92b aufweist. Bspw. können die Strahlumlenkelemente 54a'-54d' eine von Strahlumlenkelementen 54a-d verschiedene Neigung oder Oberflächenkrümmung aufweisen.

Das bedeutet, dass eine Blickrichtung der Multiaperturabbildungsvorrichtung basierend auf einer rotatorischen Bewegung und/oder auf einer translatorischen Bewegung der Strahlumlenkeinrichtung 18 erfolgen kann, wobei beide Bewegungen innerhalb des virtuellen Quaders stattfinden können und eine Bauhöhe der Multiaperturabbildungsvorrichtung 170 gering halten können.

Die Multiaperturabbildungsvorrichtung 170 bzw. deren Aktoreinrichtung weist ferner die Tauchspulenantriebe 72a und 72b auf, um den Abstand zwischen Bildsensor 12 und einzeiligem Array 14 zu verändern und um das einzeilige Array 14 entlang der Zeilenerstreckungsrichtung 24 zu bewegen.

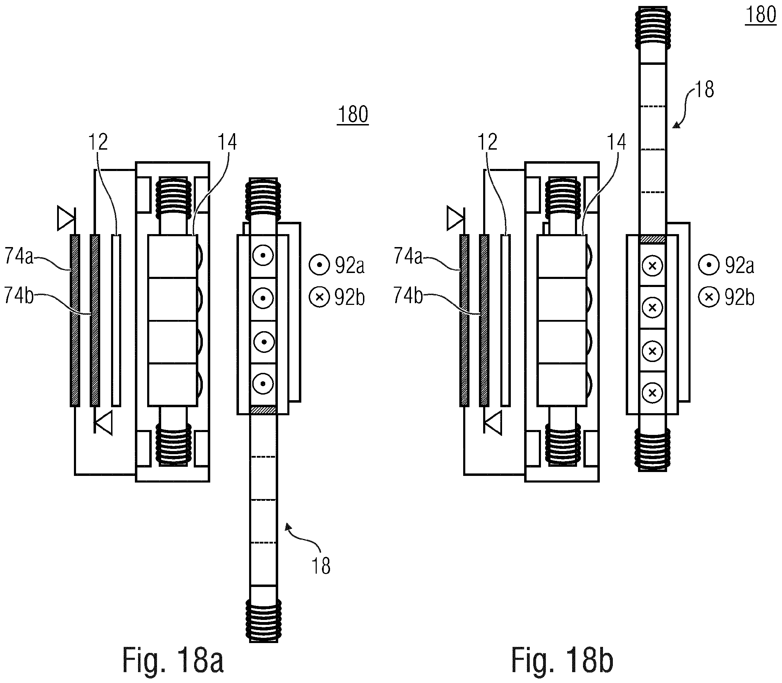

Fig. 18a zeigt eine schematische Aufsicht auf eine Multiaperturabbildungsvorrichtung 180, die gegenüber der Multiaperturabbildungsvorrichtung 170 dahin gehend modifiziert ist, dass die Aktoreinrichtung die piezoelektrischen Aktoren 74a und 74b zum Verändern des Abstands zwischen dem Bildsensor 12 und dem einzeiligen Array 14 aufweist. Fig. 18a zeigt die Strahlumlenkeinrichtung 18 in der ersten Position. Fig. 18b zeigt die Strahlumlenkeinrichtung 18 in der zweiten Position, bei der die Strahlumlenkeinrichtung 18 gegenüber der Konfiguration in Fig. 18a translatorisch bewegbar ist.

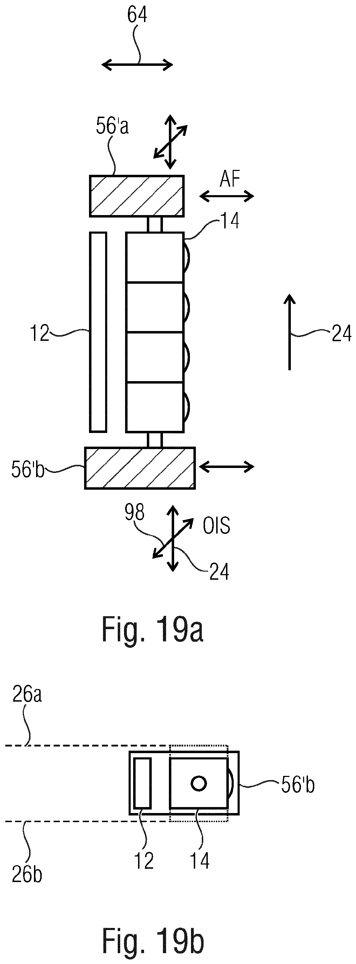

Fig. 19a zeigt eine schematische Aufsicht auf den Bildsensor 12 und das einzeilige Array 14, wobei das einzeilige Array 14 mit Aktoren 56'a und 56'b der Aktoreinrichtung verbunden ist, die ausgebildet sind, um das einzeilige Array 14 bezüglich dreier senkrecht zueinander angeordneter Raumachsen zu bewegen. Eine erste Raumachse kann die Zeilenerstreckungsrichtung 24 sein. Eine zweite Raumachse kann die Richtung 64 sein. Eine dritte Raumachse 98 kann mit der Zeilenerstreckungsrichtung 24 eine Ebene senkrecht zu der Richtung 64a aufspannen. Die Aktoren 56'a und 56'b können ausgebildet sein, um das einzeilige Array 14 entlang der Zeilenerstreckungsrichtung 24 und/oder der Richtung 98 zu bewegen, um eine optische Bildstabilisierung (Optical Image Stabilization - OIS) zu erhalten und/oder um das einzeilige Array 14 entlang der Richtung 64 zu bewegen, um eine Autofokusfunktion AF zu erhalten. Wie es in Fig. 19b dargestellt ist, kann der Aktor 56'b und/oder der Aktor 56'a vollständig innerhalb der Ebenen 26a und 26b angeordnet sein. Gemäß Ausführungsbeispielen kann der Aktor 56'a und/oder 56'b diese Ebenen auch geringfügig überragen. Vereinfacht ausgedrückt kann diese Anordnung so bezeichnet werden, dass die Aktoren 56'a und 56'b neben dem einzeiligen Array 14 angeordnet sind, wenn die Richtung 98 als Höhenrichtung bezeichnet wird.

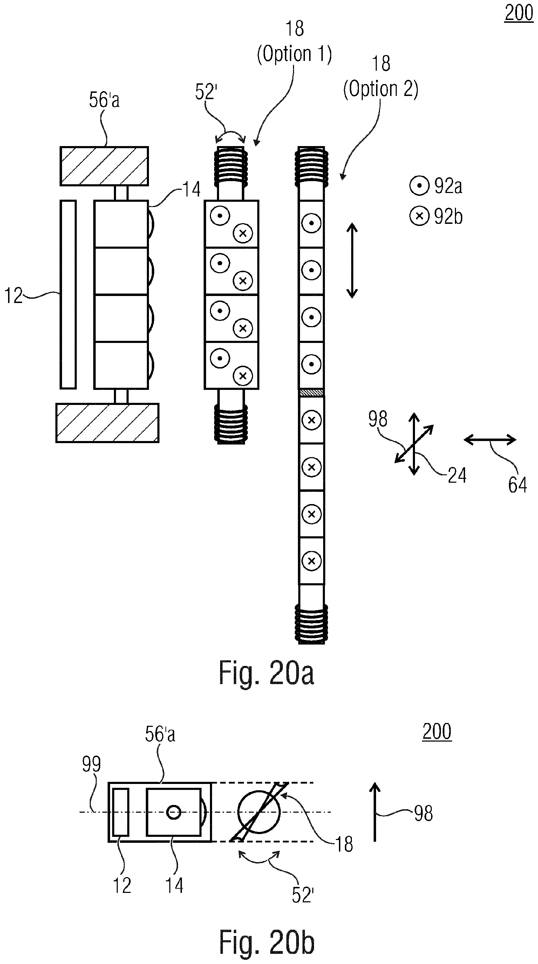

Fig. 20a zeigt eine schematische Aufsicht auf eine Multiaperturabbildungsvorrichtung 200, die eine Anordnung von Bildsensor 12 und einzeiligem Array 14 gemäß Fig. 19a und 19b aufweist. Die Multiaperturabbildungsvorrichtung 200 weist gemäß einer ersten Option die Strahlumlenkeinrichtung 18 auf, die ausgebildet ist, um basierend auf der Rotationsbewegung 52' bewegt zu werden, um zwischen den Blickrichtungen 92a und 92b zu wechseln. Gemäß einer zweiten Option weist die Multiaperturabbildungsvorrichtung 200 die Strahlumlenkeinrichtung 18 auf, die ausgebildet ist, um entlang der Zeilenerstreckungsrichtung 24 bewegt zu werden, um zwischen den Blickrichtungen 92a und 92b zu wechseln, wie es beispielsweise im Zusammenhang mit den Fig. 17a und 17b beschrieben ist. Alternativ oder zusätzlich können die Strahlumlenkeinrichtung 18 gemäß Option 1 und die Strahlumlenkeinrichtung 18 gemäß Option 2 angeordnet sein, etwa um eine erhöhte Anzahl von Blickrichtungen zu erhalten. Beispielsweise kann die Strahlumlenkeinrichtung 18 gemäß der ersten Option zumindest teilweise transparent sein, um einen Teil des Strahlengangs der optischen Kanäle auf die Strahlumlenkeinrichtung 18 gemäß der zweiten Option zu lenken.

Fig. 20b zeigt eine schematische Seitenschnittansicht der Multiaperturabbildungsvorrichtung 200. Basierend auf der Rotationsbewegung 52' kann eine Ausdehnung der Multiaperturabbildungsvorrichtung 200 entlang der Richtung 98 geringer sein als gemäß einer Anordnung der Aktoren 56'a und 56'b gemäß den Fig. 19a und 19b, da beispielsweise auf eine Relativbewegung zwischen Bildsensor 12 und einzeiligem Array 14 entlang der Richtung 98 verzichtet werden. Das bedeutet, ein Vorhalten eines Bauraums für diese Relativbewegung kann entfallen. Die Strahlumlenkeinrichtung 18 ist ausgebildet, um den Strahlengang der optischen Kanäle zumindest in eine erste Blickrichtung 92a und eine zweite Blickrichtung 92b abzulenken. Die Aktoreinrichtung umfasst einen oder mehrere Aktoren 56'a und/oder 56'b. Der zumindest eine Aktor 56'a und/oder 56'b ist in einer Ebene 99 angeordnet, in der die Strahlumlenkeinrichtung 18 angeordnet ist. Die Ebene 99 kann senkrecht zu der ersten Blickrichtung 92a und/oder der der zweiten Blickrichtung 92b angeordnet sein. Alternativ oder zusätzlich können auch andere hierein beschriebene Aktoren angeordnet sein.

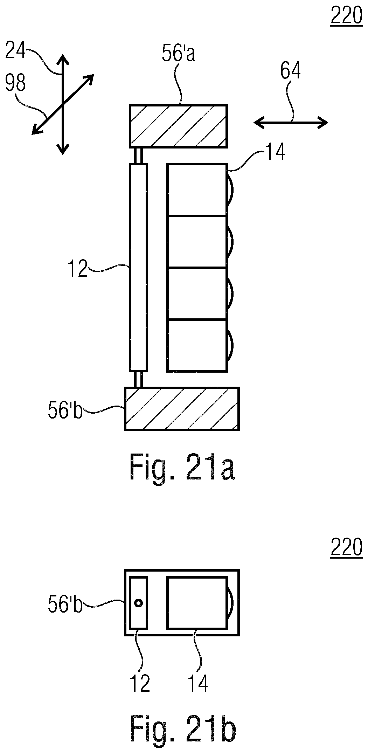

Fig. 21a zeigt eine schematische Aufsicht auf eine Konfiguration des Bildsensors 12 und des einzeiligen Arrays 14, die gegenüber der Konfiguration gemäß Fig. 19a derart modifiziert ist, dass der Aktor 56'a und der Aktor 56'b mit dem Bildsensor 12 verbunden sein kann, um die Relativbewegung entlang der Richtungen 24, 64 und/oder 98 zwischen dem Bildsensor 12 und dem einzeiligen Array 14 zu erzeugen.

Fig. 21b zeigt eine schematische Seitenschnittansicht der Konfiguration gemäß Fig. 21a, die gleich oder vergleichbar zu der Konfiguration gemäß Fig. 19b ist, wobei der Aktor 56'b mit dem Bildsensor 12 verbunden ist.

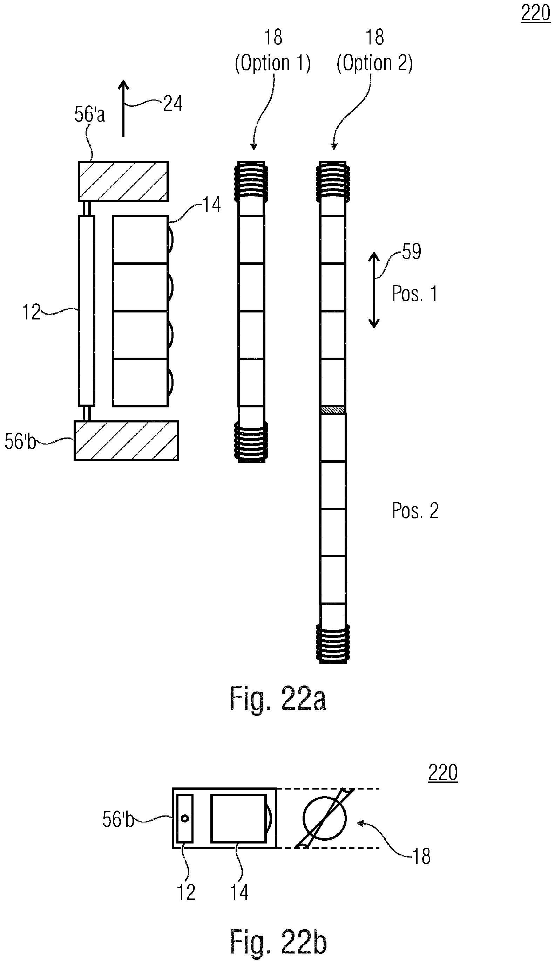

Fig. 22a zeigt eine schematische Aufsicht auf eine Multiaperturabbildungsvorrichtung 220, die gegenüber der Multiaperturabbildungsvorrichtung 200 dahin gehend modifiziert ist, dass die Aktoren 56'a und 56'b der Aktoreinrichtung mit dem Bildsensor 12 verbunden sind, wie es im Zusammenhang mit der Fig. 21a beschrieben ist. Die Strahlumlenkeinrichtung 18 ist zwischen einer ersten Position Pos1 und einer zweiten Position Pos2 durch eine translatorische Bewegung 59, die im Wesentlichen parallel zu der Zeilenerstreckungsrichtung 24 verläuft, umschaltbar.

Fig. 22b zeigt eine schematische Seitenschnittansicht der Multiaperturabbildungsvorrichtung 220, die vergleichbar mit der Seitenschnittansicht gemäß Fig. 20b ist, wobei die Aktoren 56'a und/oder 56'b mit dem Bildsensor 12 verbunden sein können.

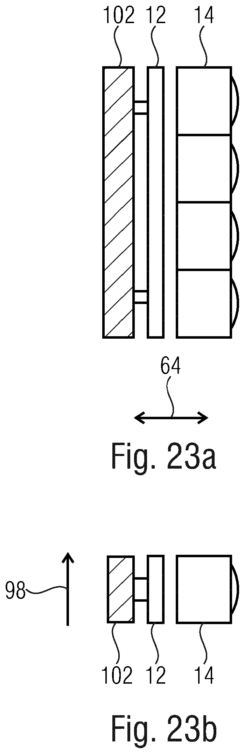

Fig. 23a zeigt eine schematische Aufsicht auf eine Konfiguration umfassend den Bildsensor 12 und das einzeilige Array 14, wobei ein Aktor 102 der Aktoreinrichtung einer Multiaperturabbildungsvorrichtung an einer dem einzeiligen Array 14 abgewandten Seite des Bildsensors 12 angeordnet und mit dem Bildsensor 12 verbunden ist. Der Aktor 102 ist ausgebildet, um den Bildsensor 12 entlang der Richtung 64 zu bewegen, um einen Fokus der optischen Kanäle zu verändern. Weiterhin kann der Aktor 102 eine Bewegung entlang der Richtungen 98 und/oder 24 ermöglichen, z.B. um eine optische Bildstabilisierung erzielen zu können.

Der Aktor 102 kann beispielsweise als pneumatischer, hydraulischer, piezoelektrischer Aktor, DC-Motor, Schrittmotor, thermischer Aktor, elektrostatischer Aktor, elektrostriktiver und/oder magnetostriktiver Aktor oder Antrieb, Wechselstrommotor und/oder Tauchspulenantrieb implementiert sein. Beispielsweise kann es sich bei dem Aktor 102 um einen piezoelektrisch oder thermisch aktuierten Biegeaktor handeln. Vereinfacht ausgedrückt befindet sich der Aktor 102 hinter dem Bildsensor 12, um diesen zu bewegen.

Fig. 23b zeigt eine schematische Seitenschnittansicht der Konfiguration aus Fig. 23a. Eine Bauhöhe der Konfiguration ist durch eine Anordnung des Aktors 102 nicht oder nur unwesentlich erhöht.

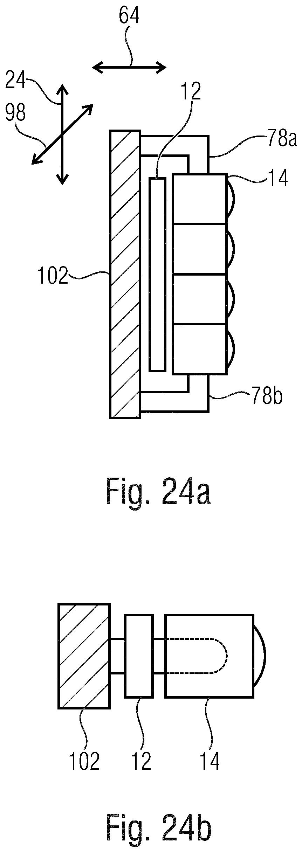

Fig. 24a zeigt eine schematische Aufsicht auf den Bildsensor 12 und das einzeilige Array 14, wobei eine Konfiguration gegenüber der Ansicht in Fig. 23a dahin gehend modifiziert ist, dass der Aktor 102 mittels der mechanischen Verbindungen 78a und 78b mit dem einzeiligen Array 14 verbunden ist, und ausgebildet ist, um das einzeilige Array 14 gegenüber dem Bildsensor 12 zu bewegen. Ferner kann der Aktor 102 ausgebildet sein, um das einzeilige Array 14 entlang der Achsen 24, 98 und/oder 64 gegenüber dem Bildsensor 12 zu bewegen.

Fig. 24b zeigt eine schematische Seitenschnittansicht der Konfiguration aus Fig. 24a.

Obwohl sich manche der vorangehend beschriebenen Ausführungsbeispiele auf eine Anordnung oder Konfiguration von Bildsensor 12 und einzeiligem Array 14 beziehen, können diese ohne Weiteres benachbart einer Strahlumlenkeinrichtung angeordnet werden, so dass diese Ausführungen ohne Weiteres auf Multiaperturabbildungsvorrichtungen übertragbar sind. Die beschriebenen Konfigurationen von Bildsensor und einzeiligem Array beschreiben gemäß Ausführungsbeispielen Komponenten einer Multiaperturabbildungsvorrichtung.

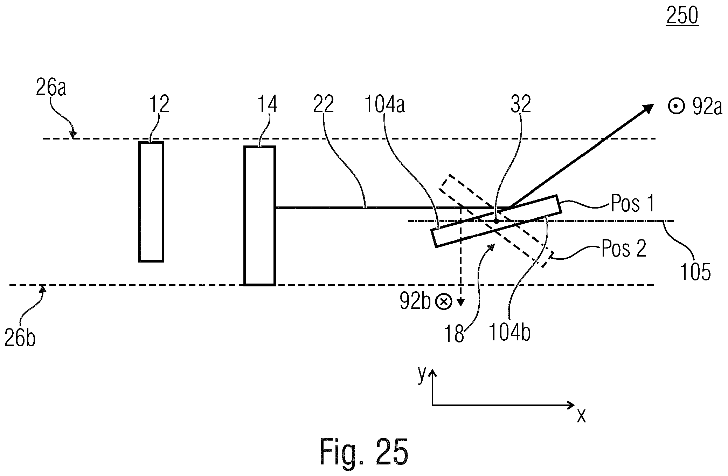

Fig. 25 zeigt eine schematische Seitenschnittansicht einer Multiaperturabbildungsvorrichtung 250, die den Bildsensor 12, das einzeilige Array 14 und die um die Rotationsachse 32 drehbar gelagerte Strahlumlenkeinrichtung 18 umfasst.

Die Strahlumlenkeinrichtung 18 kann zwischen zwei Positionen Pos1 und Pos2 umschaltbar sein, um die Strahlengänge 22 der optischen Kanäle in eine erste Blickrichtung 92a und/oder eine zweite Blickrichtung 92b umzulenken. Die Positionen können beispielsweise stabile Positionen sein, so dass die Strahlumlenkeinrichtung 18 bistabil umschaltbar ist. Die ggf. stabilen Positionen können mit einer rotatorischen Bewegung zur optischen Bildstabilisierung überlagerbar sein. Die Blickrichtungen 92a und 92b können senkrecht, antiparallel oder einen anderen Winkel zueinander aufweisend angeordnet sein und beispielsweise von einer Orientierung der Strahlumlenkeinrichtung 18 in der jeweiligen Position beeinflusst sein. Eine Zwischenposition oder Mittenposition 105 der Strahlumlenkeinrichtung 18 kann beispielsweise eine waagrechte oder senkrechte Ausrichtung der Hauptseiten 104a und/oder 104b bezüglich des einzeiligen Arrays 14 oder des Bildsensors 12 bzw. Hauptseiten hiervon umfassen. Vorteilhaft daran ist, dass ein Umschalten zwischen der ersten Position Pos1 und der zweiten Position Pos2 über die Mittenposition 105 eine geringe Bauhöhe der Multiaperturabbildungsvorrichtung 250 und die Nutzung in mindestens zwei Blickrichtungen ermöglicht. Eine Abmessung von Hauptseiten 104a und/oder 104b senkrecht zu einer Dickenrichtung, beispielsweise entlang der x-Richtung nahezu beliebig groß, d.h. nahezu unabhängig sein kann, ohne eine Bauhöhe der Multiaperturabbildungsvorrichtung 250 zu erhöhen.

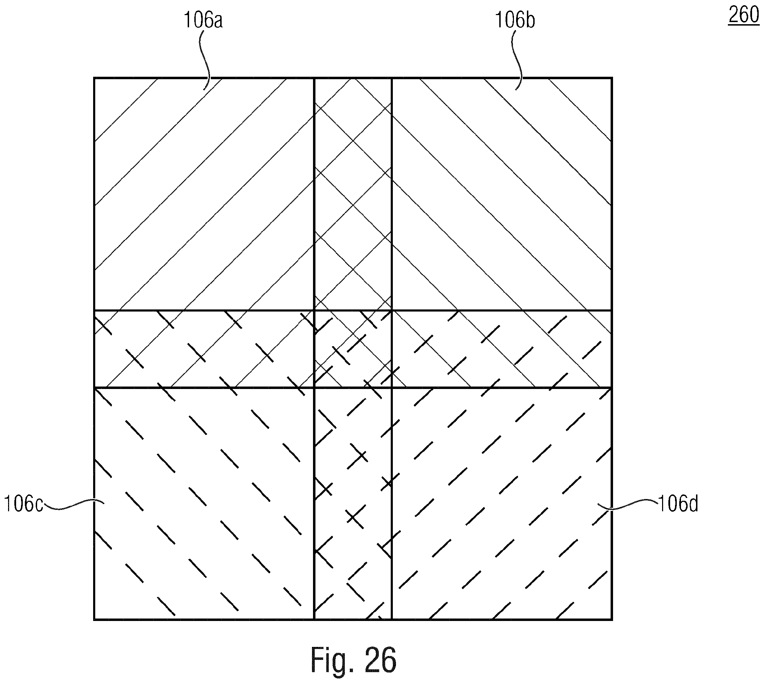

Fig. 26 zeigt eine schematische Darstellung eines Gesamtgesichtsfelds (Objektbereich) 260, wie es beispielsweise mit einer hierin beschriebenen Multiaperturabbildungsvorrichtung erfassbar ist. Die Strahlengänge der optischen Kanäle der Multiaperturabbildungsvorrichtungen können auf voneinander verschiedene Teilgesichtsfelder (Teilbereiche eines Objektbereichs) 106a-d lenkbar sein, wobei jedem optischen Kanal ein Teilgesichtsfeld 106a-d zugeordnet werden kann. Die Teilgesichtsfelder 106a-d können miteinander überlappen, um eine Aneinanderfügung einzelner Teilbilder zu einem Gesamtbild zu ermöglichen. Weist die Multiaperturabbildungsvorrichtung eine von vier verschiede Anzahl von optischen Kanälen auf, kann das Gesamtgesichtsfeld 260 eine von vier verschiedener Anzahl von Teilgesichtsfeldern aufweisen. Alternativ oder zusätzlich kann zumindest ein Teilgesichtsfeld 106a-d von einem zweiten oder einer höheren Anzahl von optischen Kanälen erfasst werden, um eine sogenannte Superresolution des erzeugten Bildes zu erhalten. Eine Anzahl von optischen Kanälen und/oder eine Anzahl von Teilgesichtsfeldern ist beispielsweise beliebig und kann eine Anzahl von zumindest zwei, zumindest drei, zumindest vier, zumindest zehn, zumindest 20 oder einen noch höheren Wert aufweisen.

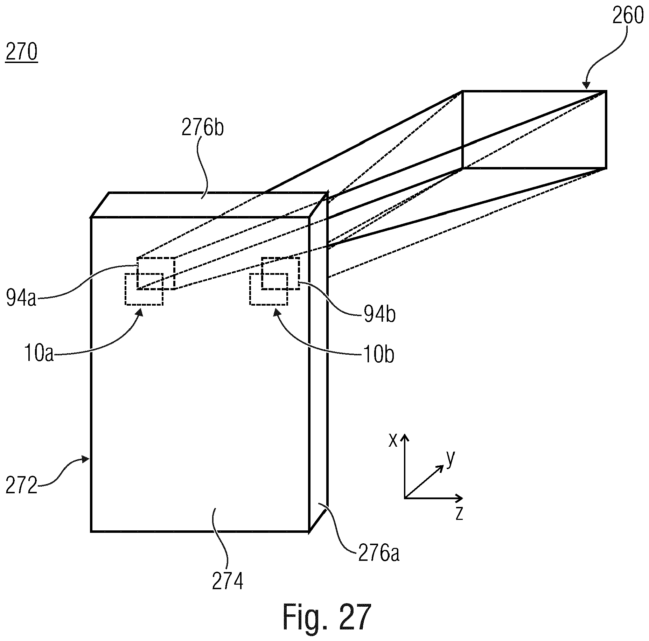

Fig. 27 zeigt eine schematische perspektivische Ansicht eines Abbildungssystems 270, das eine erste Multiaperturabbildungsvorrichtung 10a und eine zweite Multiaperturabbildungsvorrichtung 10b aufweist, die ausgebildet sind, um jeweils das Gesamtgesichtsfeld 260 (Objektbereich) zu erfassen. Das bedeutet, dass der Objektbereich stereoskopisch erfassbar ist.

Gemäß weiteren Ausführungsbeispielen kann zumindest eine der Multiaperturabbildungsvorrichtungen als Multiaperturabbildungsvorrichtung 10, 40, 140, 150, 160, 170, 180, 200, 220 oder 250 gebildet sein. Gemäß weiteren Ausführungsbeispielen kann das Abbildungssystem 270 weitere Multiaperturabbildungsvorrichtungen gemäß hierin beschriebenen Ausführungsbeispielen umfassen, um den Objektbereich 260 oder einen hiervon verschiedenen Objektbereich abzubilden.

Wie es im Zusammenhang mit hierin beschriebenen Ausführungsbeispielen ausgeführt ist, können die Multiaperturabbildungsvorrichtungen 10a oder 10b ausgebildet sein, um eine Blickrichtung der jeweiligen Multiaperturabbildungsvorrichtung und mithin des Abbildungssystems 270 zu verändern, um eine Position des Gesamtgesichtsfelds 260 im Raum zu verändern.

Das Abbildungssystem 270 kann als tragbares System, insbesondere als mobile Kommunikationseinrichtung gebildet sein. Das tragbare System 270 kann beispielsweise ein Mobiltelefon, wie etwa ein Smartphone, ein mobiler Computer, wie etwa ein Tablet-Computer und/oder eine mobile Musikabspieleinrichtung sein.

Das Abbildungssystem 270 kann ein Gehäuse 272 aufweisen. Das Gehäuse 272 kann flach ausgebildet sein. Das bedeutet, das Gehäuse 272 kann eine Ausdehnung entlang der drei Raumachsen x, y und z aufweisen. Beispielsweise können Hauptseiten 274 des Gehäuses 272 in einer x-/z-Ebene oder parallel hierzu angeordnet sein. Nebenseiten 276a und 276b können beispielsweise die Hauptseiten 274 miteinander verbinden. Ein flaches Gehäuse kann beispielsweise so verstanden werden, dass es eine erste und eine zweite Abmessung von Hauptseiten 274 (beispielsweise entlang der x-Richtung und entlang der z-Richtung) umfasst, die bezogen auf eine dritte Abmessung, beispielsweise entlang der y-Richtung, zumindest eine dreifache, zumindest eine fünffache, zumindest eine siebenfache oder eine höhere Abmessung aufweisen. Beispielsweise kann ein flaches Gehäuse eine Breite aufweisen, die ein Dreifaches einer Gehäusedicke umfasst und/oder eine Höhe aufweisen, die ein Vierfaches der Gehäusedicke umfasst.

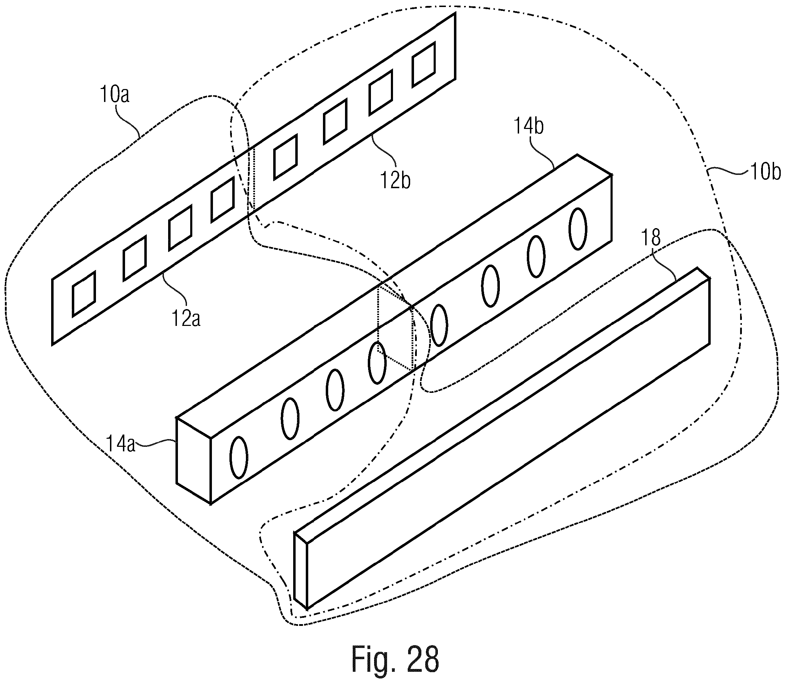

Fig. 28 zeigt einen schematischen Aufbau umfassend eine erste Multiaperturabbildungsvorrichtung 10a und eine zweite Multiaperturabbildungsvorrichtung 10b, wie er bspw. in dem Abbildungssystem 270 angeordnet sein kann. Die einzeiligen Arrays 14a und 14b bilden eine gemeinsame Zeile. Die Bildsensoren 12a und 12b können auf einem gemeinsamen Substrat bzw. auf einem gemeinsamen Schaltungsträger wie einer gemeinsamen Platine oder einem gemeinsamen Flexboard montiert sein. Alternativ können die Bildsensoren 12a und 12b auch von einander verschiedene Substrate umfassen. Verschiedene Mischungen dieser Alternativen sind natürlich ebenfalls möglich, wie etwa Multiaperturabbildungsvorrichtungen umfassend einen gemeinsamen Bildsensor, ein gemeinsames Array und/oder eine gemeinsame Strahlumlenkeinrichtung 18 sowie weitere Multiaperturabbildungsvorrichtungen, die separate Komponenten aufweisen. Vorteilhaft an einem gemeinsamen Bildsensor, einem gemeinsamen einzeiligen Array und/oder einer gemeinsamen Strahlumlenkeinrichtung ist, dass eine Bewegung einer jeweiligen Komponente mit einer großen Präzision durch ansteuern einer geringen Menge von Aktoren erhalten werden kann und eine Synchronisierung zwischen Aktoren reduziert oder vermieden werden kann. Ferner kann eine hohe thermische Stabilität erhalten werden. Alternativ oder zusätzlich können auch andere und/oder von einander verschiedene Multiaperturabbildungsvorrichtungen 10, 40, 140, 150, 160, 170, 180, 200, 220 und/oder 250 ein gemeinsames Array, einen gemeinsamen Bildsensor und/oder eine gemeinsame Strahlumlenkeinrichtung aufweisen.

Ein Verfahren zum Herstellen einer Multiaperturabbildungsvorrichtung kann ein Bereitstellen eines Bildsensors, ein Anordnen eines einzeiligen Arrays von nebeneinander angeordneten optischen Kanälen, so dass jeder optische Kanal eine Optik zur Abbildung eines Teilbereichs eines Objektbereichs auf einen Bildsensorbereich des Bildsensors umfasst, ein Anordnen einer Strahlumlenkstruktur zum Umlenken eines Strahlengangs der optischen Kanäle und ein Anordnen einer Aktoreinrichtung zum Erzeugen einer Relativbewegung zwischen dem Bildsensor, dem einzeiligen Array und der Strahlumlenkeinrichtung umfassen. Die Aktoreinrichtung kann so angeordnet werden, dass sie zumindest teilweise zwischen zwei Ebenen angeordnet ist, die durch Seiten eines Quaders aufgespannt werden, wobei die Seiten des Quaders zueinander sowie zu einer Zeilenerstreckungsrichtung des einzeiligen Arrays und eines Teils des Strahlengangs der optischen Kanäle zwischen dem Bildsensor und der Strahlumlenkeinrichtung parallel ausgerichtet sind, wobei das Volumen des Quaders minimal ist und dennoch den Bildsensor, das einzeilige Array und die Strahlumlenkeinrichtung umfasst.

In anderen Worten kann die Bauhöhe der Multiaperturabbildungssysteme oder -vorrichtungen mit linearer Kanalanordnung von einem Durchmesser der Linsen (Optiken) nach unten begrenzt sein. Multiaperturabbildungssysteme mit linearer Kanalanordnung können auf eine möglichst geringe Bauhöhe abzielen. Um die Bauhöhe des Kameraaufbaus nicht weiter zu vergrößern, können die Einrichtungen für die Realisierung relativer Bewegungen zwischen Bildsensor(en) Abbildungsoptiken und ggf. vorhandenen strahlumlenkenden Spiegeln lediglich neben, vor und/oder hinter dem Abbildungsmodul (Bildsensor und einzeiliges Array) platziert werden, jedoch nicht darüber und/oder darunter.

Die Relativbewegung kann translativ und/oder rotativ, analog oder bistabil/mehrfach stabil ausgeführt sein und können für die Realisierung von Fokussier- und optischer Bildstabilisierungsfunktion genutzt werden. Die Bewegung des Spiegels (Strahlumlenkeinrichtung) kann auf Basis pneumatischer, hydraulischer, piezoelektrischer Aktoren, DC-Motoren, Schrittmotoren, thermischer Aktoren, elektrostatischer Aktoren, elektrostriktiver und/oder magnetostriktiver Aktoren oder Antriebe erfolgen.

Hierin beschriebene Aktoren der Aktoreinrichtung zur Nutzung eines Autofokus und/oder einer optischen Bildstabilisierung können unabhängig voneinander (individuell) synchron zueinander oder gar identisch zueinander ansteuerbar sein. Dies gilt insbesondere auch für eine mehrfache Anordnung von Multiaperturabbildungsvorrichtungen in einem Gehäuse, etwa in einem Multiaperturabbildungssystem.

Durch ein Anordnen der für eine Realisierung relativer Bewegungen zwischen Einzelkomponenten der Multiaperturkameraaufbauten beschriebenen Antriebs-, Führungs- und Halterungselemente ohne Vergrößerung der Bauhöhe, die im Wesentlichen von einem Durchmesser der Optiken bestimmt wird, können flachbauende Kameras in flachen Gehäusen angeordnet werden, so dass die flachen Gehäuse weiter miniaturisierbar sind. Hierin beschriebene Ausführungsbeispiele beschreiben Multiaperturabbildungssysteme mit linearer Kanalanordnung und kleinster Baugröße.

Manche der hierin beschriebenen Ausführungsbeispiele beziehen sich auf eine Anordnung von Komponenten für die Erzeugung von Bewegungen basierend auf dem Tauchspulenprinzip zur Realisierung von Fokussierungs- und optischer Stabilisierungsfunktion in Multiaperturabbildungssystemen mit linearer Anordnung der Abbildungskanäle.

Tauchspulenantriebe (engl.: Voice Coil Motors) sind häufig oder am häufigsten genutzte Antriebe und sind in ihrem Aufbau an Einzelaperturprinzipien angepasst und können hierauf optimiert sein.

Für die Realisierung der Fokussierfunktion kann vorteilhafterweise das Abbildungsmodul entlang der optischen Achsen der optischen Kanäle unter Nutzung eines Tauchspulenantriebs bewegbar sein, wobei der/die Bildsensor(en) ortsfest sein können oder anders herum. Für die Realisierung einer optischen Bildstabilisierungsfunktion kann beispielsweise oder vorteilhafterweise das Abbildungsmodul senkrecht zu den optischen Achsen der optischen Kanäle in zwei Dimensionen relativ zu dem/den ortsfesten Bildsensor(en) unter Nutzung von Tauchspulenantrieben bewegbar sein oder anders herum. Ggf. wünschenswerte oder erforderliche rückstellende Kräfte können durch eine mechanische, pneumatische und/oder hydraulischer Feder erzeugbar sein.

Bei Nutzung eines strahlumlenkenden Spiegels kann alternativ die Funktion der optischen Bildstabilisierung erzielt werden. Dies kann erfolgen, durch eine eindimensionale Änderung der Blickrichtung durch Änderung der Ausrichtung des Spiegels bezüglich der optischen Achse der Abbildungskanäle. Der drehbar gelagerte Spiegel kann in eine andere Orientierung gebracht werden, wobei die Drehachse des Spiegels senkrecht bzw. nahezu senkrecht zu den optischen Achsen der Abbildungskanäle verlaufen kann. Zur Anpassung der Blickrichtung senkrecht zu der zuvor beschriebenen Blickrichtung können Bildsensor und/oder Arrayobjektiv lateral zueinander bewegt werden. Im Zusammenspiel beider Bewegungen kann eine zweidimensionale optische Bildstabilisierung erhalten werden. Die beschriebenen Lösungen für eine Anpassung der Fokussierung und/oder eine optische Bildstabilisierung können miteinander kombiniert werden. Vorteilhaft daran ist, dass für die Realisierung relativer Bewegungen unter Nutzung von Tauchspulenantrieben zwischen Einzelkomponenten der Multiaperturkameraaufbauten wünschenswerte oder erforderliche Antriebs-, Führungs- und/oder Halterungselemente ohne Vergrößerung der Bauhöhe, die im Wesentlichen vom Durchmesser der Linsen bestimmt sind, erhalten werden können.

Gemäß weiteren Ausführungsbeispielen ist eine Anordnung von Komponenten für die Erzeugung von Bewegungen basierend auf piezoelektrischen Biegewandlern und/oder thermischen Biegeranordnungen zur Realisierung von Fokussierungs- und optischer Bildstabilisierungsfunktion in Multiaperturabbildungssystemen mit linearer Anordnung der Abbildungskanäle beschrieben.

Piezoelektrische und thermische Biegeelemente können über die Vorteile geringer Schaltzeiten und kostengünstiger Fertigung verfügen. Für die Bereitstellung ausreichend großer Stellwege können die Elemente lang geformt sein, so dass deren Einsatz in konventionellen Einzelaperturkameras zu einer großen Vergrößerung des Bauraums führt und daher nicht eingesetzt wird. Dahingegen können Multiaperturabbildungssysteme mit linearer Kanalanordnung gegenüber konventionellen Einzelaperturobjektiven über ein anderes Aspektverhältnis des Bauraums verfügen. Hierbei kann die Bauhöhe der Multiaperturabbildungssysteme mit linearer Kanalanordnung vom Durchmesser der Linsen nach unten begrenzt sein. Multiaperturabbildungssysteme mit linearer Kanalanordnung können auf eine möglichst geringe Bauhöhe abzielen. Für die Realisierung der Fokussierfunktion kann vorteilhafterweise das Abbildungsmodul entlang der optischen Achsen der Kanäle unter Nutzung eines oder mehrerer piezoelektrischer oder thermischer Biegewandler bewegt werden, wobei der/die Bildsensoren ortsfest sein können oder anders herum. Das bedeutet, alternativ kann der/die Bildsensor(en) bewegt werden, wobei das Abbildungsmodul ruht. Beide Konzepte sind kombinierbar. Hierbei können Systeme unter Nutzung eines oder zweier Biegewandler unterschieden werden. Das geänderte Aspektverhältnis des Bauraums und/oder des Aufbaus kann die Nutzung piezoelektrischer und/oder thermischer Biegewandler ermöglichen, ohne dass eine wesentliche Vergrößerung des Aufbaus erhalten wird. Ferner kann in vorteilhafter Weise keine Vergrößerung der Bauhöhe erhalten werden.

Für die Realisierung der optischen Bildstabilisierungsfunktion kann vorteilhafterweise das Abbildungsmodul senkrecht zu den optischen Kanälen in zwei Dimensionen relativ zu dem/den ortsfesten Bildsensoren unter Nutzung von piezoelektrischen und/oder thermischen Biegewandler bewegt werden. Ggf. wünschenswerte oder erforderliche rückstellende Kräfte können durch eine mechanische, pneumatische und/oder hydraulische Feder erzeugt werden. Alternativ oder zusätzlich kann der/die Bildsensor(en) bewegt werden, wobei das Abbildungsmodul ruhen kann. Bei Nutzung eines strahlumlenkenden Spiegels kann alternativ die Funktion der optischen Bildstabilisierung erhalten werden. Dies kann erhalten werden durch eine eindimensionale Änderung der Blickrichtung, die durch eine Änderung der Ausrichtung des Spiegels bezüglich der optischen Achse der Abbildungskanäle erhalten werden kann, indem der drehbar gelagerte Spiegel in eine andere Orientierung gebracht wird, wobei die Drehachse des Spiegels senkrecht bzw. nahezu senkrecht zu den optischen Achsen der Abbildungskanäle verlaufen kann. Zur Anpassung der Blickrichtung senkrecht zu der zuvor beschriebenen, können Bildsensor und/oder Arrayobjektiv lateral zueinander bewegt werden. Im Zusammenspiel beider Bewegungen kann eine zweidimensionale optische Bildstabilisierung erhalten werden. Die beschriebenen Lösungen für eine Anpassung der Fokussierung und/oder der optischen Bildstabilisierung können miteinander kombiniert werden.

Dies ermöglicht eine Nutzung von schnellen und/oder kostengünstigen Antrieben, die in konventionellen Aufbauten infolge geometrischer Randbedingungen nicht möglich oder nicht wünschenswert ist.

Es wurde bereits weiter oben darauf hingewiesen, dass die Strahlengänge bzw. optischen Achsen ausgehend von der Strahlumlenkeinrichtung in voneinander verschiedene Richtungen gelenkt werden können. Dies kann erhalten werden, indem die Strahlengänge während einer Umlenkung an der Strahlumlenkeinrichtung und/oder durch die Optiken abweichend von einer Parallelität zueinander gelenkt werden. Die Strahlengänge bzw. optischen Achsen können von einer Parallelität vor bzw. ohne Strahlumlenkung abweichend sein. Dieser Umstand wird im Folgenden damit umschrieben, dass die Kanäle mit einer Art Vorab-Divergenz versehen sein können. Mit dieser Vorab-Divergenz der optischen Achsen wäre es möglich, dass sich beispielsweise nicht alle Facettenneigungen von Facetten der Strahlumlenkeinrichtung untereinander unterscheiden, sondern dass manche Gruppen von Kanälen beispielsweise die Facetten mit gleicher Neigung besitzen oder auf diese gelenkt werden. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch einen lateralen Versatz zwischen optischen Zentren der Optiken der optischen Kanäle und Bildsensorbereichen der Kanäle erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz in der anderen Transversalebene, d.h. es sind alle parallel zur Zeilenerstreckungsrichtung und gegeneinander nur noch unterschiedlich zur vorerwähnten gemeinsamen Ebene der optischen Achsen geneigt, wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden. Vereinfachend können die Optiken eine (Vorab-)Divergenz der Strahlengänge entlang einer ersten (Bild-)Richtung und die Strahlumlenkeinrichtung eine Divergenz der Strahlengänge entlang einer zweiten (Bild-)Richtung ermöglichen.

Die erwähnte möglicherweise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angerordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angerordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz verwehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein reiner In-Ebene-Versatz in Zeilenerstreckungsrichtung ändert die Bauhöhe nicht, aber es resultieren ggf. weniger Facetten und/oder die Facetten weisen nur eine Kippung in einer Winkelorientierung auf, was den Aufbau vereinfacht. So können bspw. jeweils benachbarte optische Kanäle in der gemeinsamen Ebene verlaufende, jeweils gegeneinander schielende, also mit einer Vorab-Divergenz versehene, optische Achsen aufweisen. Eine Facette kann bezüglich einer Gruppe von optischen Kanälen angeordnet, lediglich in einer Richtung geneigt und parallel zur Zeilenerstreckungsrichtung sein.

Ferner könnte es vorgesehen sein, dass manche optische Kanäle dem gleichen Teilgesichtsfeld zugeordnet sind, wie z.B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafterweise lägen Pixelbilder des Bildsensors eines Kanals einer Gruppe in Zwischenpositionen zwischen Bildern der Pixel des Bildsensors eines anderen Kanals dieser Gruppe.

Denkbar wäre beispielsweise auch ohne Superresolutionszwecke, sondern lediglich zu Stereoskopiezwecken eine Ausführung, bei denen eine Gruppe von unmittelbar benachbarten Kanälen in Zeilenerstreckungsrichtung mit ihren Teilgesichtsfeldern das Gesamtgesichtsfeld vollständig abdecken, und dass eine weitere Gruppe einander unmittelbar benachbarter Kanäle das Gesamtgesichtsfeld ihrerseits vollständig abdecken.

Obige Ausführungsbeispiele lassen sich also in Form einer Multiaperturabbildungsvorrichtung und/oder eines eine derartige Multiaperturabbildungsvorrichtung umfassenden Abbildungssystems implementieren, und zwar mit einzeiliger Kanalanordnung, wobei jeder Kanal ein Teilgesichtsfeld eines Gesamtgesichtsfeld überträgt und sich die Teilgesichtsfelder teilweise überlappen. Ein Aufbau mit mehreren solcher Multiaperturabbildungsvorrichtungen für Stereo- Trio-, Quattro usw. Aufbauten für die 3D-Bildaufnahme ist möglich. Die Mehrzahl von Modulen kann dabei als eine zusammenhängende Zeile ausgeführt sein. Die zusammenhängende Zeile könnte identische Aktoren und ein gemeinsames Strahlumlenkelement nutzen. Ein oder mehrere eventuell im Strahlengang vorhandene verstärkende Substrate können sich über die gesamte Zeile, die einen Stereo-, Trio, Quattro-Aufbau bilden kann, erstrecken. Es können Verfahren der Superresolution genutzt werden, wobei mehrere Kanäle dieselben Teilbildbereiche abbilden. Die optischen Achsen können auch bereits ohne Strahlumlenkvorrichtung divergent verlaufen, so dass weniger Facetten auf der Strahlumlenkeinheit benötigt werden. Die Facetten besitzen dann vorteilhafter Weise nur eine Winkelkomponente. Der Bildsensor kann einteilig sein, nur eine zusammenhängende Pixelmatrix oder mehrere unterbrochene aufweisen. Der Bildsensor kann aus vielen Teilsensoren zusammengesetzt sein, die z.B. auf einer Leiterplatte nebeneinander angeordnet sind. Ein Autofokusantrieb kann so ausgeführt sein, dass das Strahlumlenkelement synchron mit den Optiken bewegt wird, oder ruhend ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Multiaperturabbildungsvorrichtung (10; 40; 140; 150; 160; 170; 180; 200; 220; 250) mit:
einem Bildsensor (12);
einem einzeiligen Array (14) von nebeneinander angeordneten optischen Kanälen (16a-b), wobei jeder optische Kanal (16a-b) eine Optik (17a-d) zur Abbildung eines Teilbereichs (106a-d) eines Objektbereichs (260) auf einen Bildsensorbereich (13a-d) des Bildsensors (12) umfasst, wobei das einzeilige Array (14) einen Träger (15) aufweist, durch den die optischen Kanäle (16a-b) hindurchlaufen;
einer Strahlumlenkeinrichtung (18) zum Umlenken eines Strahlengangs (22a-d) der optischen Kanäle (16a-b); und
einer Aktoreinrichtung (28) zum Erzeugen einer Relativbewegung zwischen dem Bildsensor (12), dem einzeiligen Array (14) und der Strahlumlenkeinrichtung (18),
wobei die Aktoreinrichtung (28) so angeordnet ist, dass sie zumindest teilweise zwischen zwei Ebenen (26a, 26b) angeordnet ist, die durch Seiten eines Quaders (34) aufgespannt werden, wobei die Seiten des Quaders (34) zueinander sowie zu einer Zeilenerstreckungsrichtung (24) des einzeiligen Arrays (14) und eines Teils des Strahlengangs (22a-d) der optischen Kanäle (16a-b) zwischen dem Bildsensor (12) und der Strahlumlenkeinrichtung (18) parallel ausgerichtet sind und dessen Volumen minimal ist und dennoch den Bildsensor (12), das einzeilige Array (14) und die Strahlumlenkeinrichtung (18) umfasst;
wobei die Multiaperturabbildungsvorrichtung eine Dickenrichtung (36) aufweist, die normal zu den zwei Ebenen (26a, 26b) angeordnet ist, wobei die Aktoreinrichtung (28) eine Abmessung (38) parallel zu der Dickenrichtung (36) aufweist und ein Anteil (42) von höchstens 10 % der Abmessung (38) ausgehend von einem Bereich (44) zwischen den zwei Ebenen (26a, 26b) über die zwei Ebenen (26a, 26b) hinausragt;
wobei die Aktoreinrichtung einen piezoelektrischen Aktor (74) umfasst, der mit dem Bildsensor oder dem Array (14) gekoppelt ist; wobei der Bildsensor (12) oder die Strahlumlenkeinrichtung (18) zwischen dem piezoelektrischen Aktor der Aktoreinrichtung (28) und dem einzeiligen Array (14) angeordnet ist, wobei der piezoelektrische Aktor ausgebildet ist, um einen Abstand (46) zwischen dem Bildsensor (12) und dem einzeiligen Array (14) zu verändern und um sich bei einer Aktuierung entlang einer Strahlrichtung parallel zu einem Strahlengang durch die optischen Kanäle zu verformen; und
wobei der piezoelektrische Aktor über eine mechanische Umlenkeinrichtung (78; 84) mit dem Bildsensor oder dem Array (14) verbunden ist,
wobei die mechanische Umlenkeinrichtung (78; 84) zwischen den Ebenen (26a-b) angeordnet ist;
wobei die mechanische Umlenkeinrichtung (78; 84) oder das einzeilige Array (14) oder der Bildsensor über eine Lagerung (82) gelagert ist, die ausgebildet ist, um Bewegungsfreiheitsgrade des einzeiligen Arrays (14) oder des Bildsensors bewirkt durch eine Auslenkung des Aktors (74) auf eine Richtung (64) parallel oder antiparallel zu der Strahlrichtung zu beschränken;
wobei der piezoelektrische Aktor als piezoelektrischer Biegeaktor gebildet ist.

2. Multiaperturabbildungsvorrichtung gemäß Anspruch 1, bei dem innerhalb von oder benachbart zu transparenten Bereichen des Trägers (15) und/oder an Endbereichen hiervon die Optiken (17a-d) der optischen Kanäle (16a-d) angeordnet sind und/oder der Träger (15) transparent gebildet ist und an einer Oberfläche des Trägers (15) die Optiken (16a-d) angeordnet sind, die die Abbildung des jeweiligen Teilgesichtsfeldes des Gesamtgesichtsfeldes auf den jeweiligen Bildsensorbereich (13a-b) des Bildsensors (12) beeinflussen.

3. Multiaperturabbildungsvorrichtung gemäß Anspruch 1 oder 2, bei der die Aktoren der Aktoreinrichtung vollständig zwischen den zwei Ebenen (26a, 26b) angeordnet sind.

4. Multiaperturabbildungsvorrichtung gemäß einem der vorangehenden Ansprüche, wobei die Aktoreinrichtung (28) zum Erzeugen der Relativbewegung an einer dem einzeiligen Array (14) abgewandten Seite des Bildsensors (12) angeordnet ist.

5. Multiaperturabbildungsvorrichtung gemäß einem der vorangehenden Ansprüche, wobei die Relativbewegung eine Veränderung eines Abstands (46) zwischen dem Bildsensor (12) und dem einzeiligen Array (14) entlang einer Strahlrichtung parallel zu einem Strahlengang (22a-d) durch die optischen Kanäle (16a-b) zwischen dem einzeiligen Array (14) und der Strahlumlenkeinrichtung (18) durch eine Verschiebung des einzeiligen Arrays (14) und eine Beibehaltung eines Abstands (48) zwischen dem einzeiligen Array (14) und der Strahlumlenkeinrichtung (18) entlang der Strahlrichtung umfasst.

6. Multiaperturabbildungsvorrichtung gemäß einem der vorangehenden Ansprüche, wobei der Bildsensor (12) oder die Strahlumlenkeinrichtung (18) zwischen einem ersten Aktor (56; 56'a-b; 57a-b; 66a-f; 72a-b; 74a-b; 102) der Aktoreinrichtung (28) und dem einzeiligen Array (14) angeordnet ist, wobei der erste Aktor (56; 56'a-b; 57a-b; 66a-f; 72a-b; 74a-b; 102) ausgebildet ist, um einen Abstand (46) zwischen dem Bildsensor (12) und dem einzeiligen Array (14) zu verändern.

7. Multiaperturabbildungsvorrichtung gemäß einem der vorangehenden Ansprüche, wobei die Aktoreinrichtung (28) einen Tauchspulenmotor (66a-f; 72a-b) umfasst, der ausgebildet ist, um eine Relativposition des Bildsensors (12) bezüglich des einzeiligen Arrays (14) in einer Ebene (25) senkrecht zu einer Zeilenerstreckungsrichtung (24) des einzeiligen Arrays (14) und parallel zu dem Bildsensor (12) zu verändern.

8. Multiaperturabbildungsvorrichtung gemäß einem der vorangehenden Ansprüche, die in einem flachen Gehäuse (272) angeordnet ist, wobei zumindest eine erste Ausdehnung und eine zweite Ausdehnung des Gehäuses (272) entlang einer ersten Gehäuserichtung (x) und einer zweiten Gehäuserichtung (z) mindestens eine dreifache Abmessung verglichen mit einer dritten Ausdehnung des Gehäuses entlang einer dritten Gehäuserichtung (y) aufweist.

9. Multiaperturabbildungsvorrichtung gemäß einem der vorangehenden Ansprüche, wobei die Aktoreinrichtung (28) einen Aktor (56; 56'a-b; 57a-b; 66a-f; 72a-b; 74a-b; 102) umfasst, der ausgebildet ist, um die Strahlumlenkeinrichtung (18) in eine Rotationsbewegung (52) der Strahlumlenkeinrichtung (18) um eine Achse (32) parallel zu der Zeilenerstreckungsrichtung (24) des einzeiligen Arrays (14) zu versetzen.

10. Abbildungssystem (272) mit einer ersten Multiaperturabbildungsvorrichtung (10; 40; 140; 150; 160; 170; 180; 200; 220; 250) gemäß einem der vorangehenden Ansprüche und einer zweiten Multiaperturabbildungsvorrichtung (10; 40; 140; 150; 160; 170; 180; 200; 220; 250) gemäß einem der vorangehenden Ansprüche, wobei das Abbildungssystem (270) ausgebildet ist, um einen Objektbereich (260) zumindest stereoskopisch zu erfassen.

11. Verfahren zum Herstellen einer Multiaperturabbildungsvorrichtung mit folgenden Schritten:
Bereitstellen eines Bildsensors;
Anordnen eines einzeiligen Arrays von nebeneinander angeordneten optischen Kanälen, so dass jeder optische Kanal eine Optik zur Abbildung eines Teilbereichs eines Objektbereichs auf einen Bildsensorbereich des Bildsensors umfasst, so dass das einzeilige Array (14) einen Träger (15) aufweist, durch den die optischen Kanäle (16a-b) hindurchlaufen;
Anordnen einer Strahlumlenkeinrichtung zum Umlenken eines Strahlengangs der optischen Kanäle; und
Anordnen einer Aktoreinrichtung zum Erzeugen einer Relativbewegung zwischen dem Bildsensor, dem einzeiligen Array und der Strahlumlenkeinrichtung;
wobei die Aktoreinrichtung so angeordnet wird, dass sie zumindest teilweise zwischen zwei Ebenen angeordnet ist, die durch Seiten eines Quaders aufgespannt werden, wobei die Seiten des Quaders zueinander sowie zu einer Zeilenerstreckungsrichtung des einzeiligen Arrays und eines Teils des Strahlengangs der optischen Kanäle zwischen dem Bildsensor und der Strahlumlenkeinrichtung parallel ausgerichtet sind und dessen Volumen minimal ist und dennoch den Bildsensor, das einzeilige Array und die Strahlumlenkeinrichtung umfasst;
wobei die Multiaperturabbildungsvorrichtung eine Dickenrichtung (36) aufweist, die normal zu den zwei Ebenen (26a, 26b) angeordnet ist, und die Aktoreinrichtung so angeordnet wird, dass die Aktoreinrichtung (28) eine Abmessung (38) parallel zu der Dickenrichtung (36) aufweist und ein Anteil (42) von höchstens 10 % der Abmessung (38) ausgehend von einem Bereich (44) zwischen den zwei Ebenen (26a, 26b) über die zwei Ebenen (26a, 26b) hinausragt;
so dass die Aktoreinrichtung einen als piezoelektrischen Biegeaktor gebildeten piezoelektrischen Aktor (74) umfasst, der mit dem Bildsensor oder dem Array (14) gekoppelt ist; so dass der Bildsensor (12) oder die Strahlumlenkeinrichtung (18) zwischen dem piezoelektrischen Aktor der Aktoreinrichtung (28) und dem einzeiligen Array (14) angeordnet ist, so dass der piezoelektrische Aktor ausgebildet ist, um einen Abstand (46) zwischen dem Bildsensor (12) und dem einzeiligen Array (14) zu verändern und um sich bei einer Aktuierung entlang einer Strahlrichtung parallel zu einem Strahlengang durch die optischen Kanäle zu verformen; und so dass der piezoelektrische Aktor über eine mechanische Umlenkeinrichtung (78; 84) mit dem Bildsensor oder dem Array (14) verbunden ist, so dass die mechanische Umlenkeinrichtung (78; 84) zwischen den Ebenen (26a-b) angeordnet ist; so dass die mechanische Umlenkeinrichtung (78; 84) oder das einzeilige Array (14) oder der Bildsensor über eine Lagerung (82) gelagert ist, die ausgebildet ist, um Bewegungsfreiheitsgrade des einzeiligen Arrays (14) oder der Bildsensor bewirkt durch eine Auslenkung des Aktors (74) auf eine Richtung (64) parallel oder antiparallel zu der Strahlrichtung zu beschränken.

## Claims

1. Multi-aperture imaging device (10; 40; 140; 150; 160; 170; 180; 200; 220; 250), comprising:
an image sensor (12);
a single-line array (14) of juxtaposed optical channels (16a-b), wherein each optical channel (16a-b) includes optics (17a-d) for projecting a partial area (106a-d) of an object area (260) on an image sensor area (13a-d) of the image sensor (12), wherein the single-line array (14) comprises a carrier (15) through which the optical channels (16a-b) pass;
beam-deflecting means (18) for deflecting an optical path (22a-d) of the optical channels (16a-b); and
actuator means (28) for generating a relative movement between the image sensor (12), the single-line array (14) and the beam-deflecting means (18),
wherein the actuator means (28) is arranged such that the same is arranged at least partly between two planes (26a, 26b) that are spanned by sides of a cuboid (34), wherein the sides of the cuboid (34) are oriented parallel to one another as well as to a line extension direction (24) of the single-line array (14) and part of the optical path (22a-d) of the optical channels (16a-b) between the image sensor (12) and the beam-deflecting means (18) and its volume is at a minimum and still includes the image sensor (12), the single-line array (14) and the beam-deflecting means (18);
wherein the multi-aperture imaging device comprises a thickness direction (36) that is arranged normal to the two planes (26a, 26b), wherein the actuator means (28) comprises a dimension (38) parallel to the thickness direction (36) and a portion (42) of at most 10% of the dimension (38) projects beyond the two planes (26a, 26b), starting from an area (44) between the two planes (26a, 26b);
wherein the actuator means includes a piezoelectric actuator (74) that is coupled to the image sensor or the array (14); wherein said image sensor (12) or the beam-deflecting means (18) is arranged between the piezoelectric actuator of the actuator means (28) and the single-line array (14), wherein the piezoelectric actuator is configured to change a distance (46) between the image sensor (12) and the single-line array (14) and to bend along a beam direction parallel to an optical path (22a-d) through the optical channels (16a-b) when actuated; and
wherein the piezoelectric actuator is connected to the image sensor or the array (14) via a mechanical deflection means (78; 84),
wherein the mechanical deflection means (78; 84) is arranged between the planes (26a-b);
wherein the mechanical deflection means (78; 84) or the single-line array (14) or the image sensor (12) is supported via a support (82) which is configured to limit degrees of freedom of movement of the single-line array (14) or the image sensor caused by a deflection of the actuator (74) to a direction (64) parallel or antiparallel to the beam direction;
wherein the piezoelectric actuator is configured as piezoelectric bending converter.

2. Multi-aperture imaging device according to claim 1, wherein the optics (17a-d) of the optical channels (16a-d) are arranged within or adjacent to transparent areas of the carrier (15) and/or at end areas thereof, and/or the carrier (15) is formed in a transparent manner and the optics (16a-d) are arranged on a surface of the carrier (15), which influence the projection of the respective partial field of view of the total field of view on the respective image sensor area (13a-b) of the image sensor (12).

3. Multi-aperture imaging device according to claim 1 or 2, wherein the actuators of the actuator means are arranged entirely between the two planes (26a, 26b).

4. Multi-aperture imaging device according to one of the preceding claims, wherein the actuator means (28) for generating the relative movement is arranged on a side of the image sensor (12) facing away from the single-line array (14).

5. Multi-aperture imaging device according to to one of the preceding claims, wherein the relative movement includes a change of a distance (46) between the image sensor (12) and the single-line array (14) along a beam direction parallel to an optical path (22a-d) through the optical channels (16a-b) between the single-line array (14) and the beam-deflecting means (18) by shifting the single-line array (14) and maintaining a distance (48) between the single-line array (14) and the beam-deflecting means (18) along the beam direction.

6. Multi-aperture imaging device according to one of the preceding claims, wherein the image sensor (12) or the beam-deflecting means (18) is arranged between a first actuator (56; 56'a-b; 57a-b; 66a-f; 72a-b; 74a-b; 102) of the actuator means (28) and the single-line array (14), wherein the first actuator (56; 56'a-b; 57a-b; 66a-f; 72a-b; 74a-b; 102) is configured to change a distance (46) between the image sensor (12) and the single-line array (14).

7. Multi-aperture imaging device according to one of the preceding claims, wherein the actuator means (28) includes a first voice-coil motor (66a-f; 72a-b) that is configured to change a relative position of image sensor (12) with respect to the single-line array (14) in a plane (25) perpendicular to a line extension direction (24) of the single-line array (14) and parallel to the image sensor (12).

8. Multi-aperture imaging device according to one of the preceding claims which is arranged in a flat housing (272), wherein at least a first extension and a second extension of the housing (272) along a first housing direction (x) and a second housing direction (z) have at least a threefold dimension compared to a third extension of the housing along a third housing direction (y).

9. Multi-aperture imaging device according to one of the preceding claims, wherein the actuator means (28) includes an actuator (56; 56'a-b; 57a-b; 66a-f; 72a-b; 74a-b; 102) that is configured to place the beam-deflecting means (18) in a rotational movement (52) of the beam-deflecting means (18) around an axis (32) parallel to the line extension direction (24) of the single-line array (14).

10. Imaging system (272) with a first multi-aperture imaging device (10; 40; 140; 150; 160; 170; 180; 200; 220; 250) according to one of the preceding claims and a second multi-aperture imaging device (10; 40; 140; 150; 160; 170; 180; 200; 220; 250) according to one of the preceding claims, wherein the imaging system (270) is configured to capture an object area (260) at least stereoscopically.

11. Method for producing a multi-aperture imaging device, comprising:
providing an image sensor;
arranging a single-line array of juxtaposed optical channels, such that each optical channel includes optics for projecting a partial area of an object area on an image sensor area of the image sensor, such that the single-line array (14) comprises a carrier (15) through which the optical channels (16a-b) pass;
arranging beam-deflecting means for deflecting an optical path of the optical channels; and
arranging actuator means for generating a relative movement between the image sensor, the single-line array and the beam-deflecting means;
wherein the actuator means is arranged such that the same is arranged at least partly between two planes that are spanned by sides of a cuboid, wherein the sides of the cuboid are oriented parallel to one another as well as to a line extension direction of the single-line array and part of the optical path of the optical channels between the image sensor and the beam-deflecting means and its volume is at a minimum and still includes the image sensor, the single-line array and the beam-deflecting means;
wherein the multi-aperture imaging device comprises a thickness direction (36) that is arranged normal to the two planes (26a, 26b), and the actuator means is arranged such that the actuator means (28) comprises a dimension (38) parallel to the thickness direction (36) and a portion (42) of at most 10% of the dimension (38) projects beyond the two planes (26a, 26b), starting from an area (44) between the two planes (26a, 26b);
such that the actuator means includes a piezoelectric actuator (74) that is configured as a piezoelectric bending actuator bein coupled to the image sensor or the array (14); such that said image sensor (12) or the beam-deflecting means (18) is arranged between the piezoelectric actuator of the actuator means (28) and the single-line array (14), such that the piezoelectric actuator is configured to change a distance (46) between the image sensor (12) and the single-line array (14) and to bend along a beam direction parallel to an optical path through the optical channels when actuated; and such that the piezoelectric actuator is connected to the image sensor or the array (14) via a mechanical deflection means (78; 84), such that the mechanical deflection means (78; 84) is arranged between the planes (26a-b); such that the mechanical deflection means (78; 84) or the single-line array (14) or the image sensor is supported via a support (82) which is configured to limit degrees of freedom of movement of the single-line array (14) or the image sensor caused by a deflection of the actuator (74) to a direction (64) parallel or antiparallel to the beam direction.

## Revendications

1. Dispositif d'imagerie à ouvertures multiples (10; 40; 140; 150; 160; 170; 180; 200; 220; 250), avec:
un capteur d'images (12);
un réseau d'une seule rangée (14) de canaux optiques (16a-b) disposés l'un à côté de l'autre, où chaque canal optique (16a-b) comporte une optique (17a-d) destinée à reproduire une zone partielle (106a-d) d'une zone d'objet (260) sur une zone de capteur d'image (13a-d) du capteur d'image (12), où le réseau d'une seule rangée (14) présente un support (15) à travers lequel passent les canaux optiques (16a-b);
un moyen de déviation de faisceau (18) destiné à dévier un trajet de faisceau (22a-d) des canaux optiques (16a-b); et
un moyen d'actionnement (28) destiné à générer un mouvement relatif entre le capteur d'image (12), le réseau d'une seule rangée (14) et le moyen de déviation de faisceau (18),
dans lequel le moyen d'actionnement (28) est disposé de sorte qu'il soit disposé au moins partiellement entre deux plans (26a, 26b) qui sont délimités par les côtés d'un parallélépipède (34), dans lequel les côtés du parallélépipède (34) sont orientés en parallèle l'un par rapport à l'autre ainsi que dans une direction d'extension de rangée (24) du réseau d'une seule rangée (14) et d'une partie du trajet de faisceau (22a-d) des canaux optiques (16a-b) entre le capteur d'image (12) et le moyen de déviation de faisceau (18) et dont le volume est minimal et comporte néanmoins le capteur d'image (12), le réseau d'une seule rangée (14) et le moyen de déviation de faisceau (18);
dans lequel le dispositif d'imagerie à ouvertures multiples présente une direction d'épaisseur (36) qui est disposée de manière perpendiculaire aux deux plans (26a, 26b), dans lequel le moyen d'actionnement (28) présente une dimension (38) parallèle à la direction d'épaisseur (36) et une part (42) de tout au plus 10 % de la dimension (38), partant d'une zone (44) entre les deux plans (26a, 26b), s'étend au-delà des deux plans (26a, 26b);
dans lequel le moyen d'actionnement comporte un actionneur piézoélectrique (74) qui est couplé au capteur d'images ou au réseau (14); dans lequel le capteur d'image (12) ou le moyen de déviation de faisceau (18) est disposé entre l'actionneur piézoélectrique du moyen d'actionnement (28) et le réseau d'une seule rangée (14), dans lequel l'actionneur piézoélectrique est conçu pour modifier une distance (46) entre le capteur d'image (12) et le réseau d'une seule rangée (14) et pour se déformer lors d'un actionnement dans une direction de faisceau parallèle à un trajet de faisceau à travers les canaux optiques; et
dans lequel l'actionneur piézoélectrique est connecté par l'intermédiaire d'un moyen de déviation mécanique (78; 84) au capteur d'image ou au réseau (14),
dans lequel le moyen de déviation mécanique (78; 84) est disposé entre les plans (26a-b);
dans lequel le moyen de déviation mécanique (78; 84) ou le réseau d'une seule rangée (14) ou le capteur d'image est monté par l'intermédiaire d'un support (82) qui est conçu pour limiter les degrés de liberté de mouvement du réseau d'une seule rangée (14) ou du capteur d'image provoqués par une déviation de l'actionneur (74) dans une direction (64) parallèle ou antiparallèle à la direction du faisceau;
dans lequel l'actionneur piézoélectrique est réalisé en forme d'actionneur piézoélectrique à flexion.

2. Dispositif d'imagerie à ouvertures multiples selon la revendication 1, dans lequel à l'intérieur des ou de manière adjacente aux zones transparentes du support (15) et/ou à des zones d'extrémité de ces dernières sont disposées les optiques (17a-d) des canaux optiques (16a-d) et/ou est réalisé transparent le support (15), et sur une surface du support (15) sont disposées les optiques (16a-d) qui influencent la reproduction du champ de vision partiel respectif du champ de vision global sur la zone de capteur d'image respective (13a-b) du capteur d'image (12).

3. Dispositif d'imagerie à ouvertures multiples selon la revendication 1 ou 2, dans lequel les actionneurs du moyen d'actionnement sont disposés entièrement entre les deux plans (26a, 26b).

4. Dispositif d'imagerie à ouvertures multiples selon l'une des revendications précédentes, dans lequel le moyen d'actionnement (28) destiné à générer le mouvement relatif est disposé sur une face du capteur d'image (12) opposée au réseau d'une seule rangée (14).

5. Dispositif d'imagerie à ouvertures multiples selon l'une des revendications précédentes, dans lequel le mouvement relatif comporte une modification d'une distance (46) entre le capteur d'image (12) et le réseau d'une seule rangée (14) dans une direction de faisceau parallèle à un trajet de faisceau (22a-d) à travers les canaux optiques (16a-b) entre le réseau d'une seule rangée (14) et le moyen de déviation de faisceau (18) par un déplacement du réseau d'une seule rangée (14) et par un maintien d'une distance (48) entre le réseau d'une seule rangée (14) et le moyen de déviation de faisceau (18) dans la direction de faisceau.

6. Dispositif d'imagerie à ouvertures multiples selon l'une des revendications précédentes, dans lequel le capteur d'image (12) ou le moyen de déviation de faisceau (18) est disposé entre un premier actionneur (56; 56'a-b; 57a-b; 66a-f; 72a-b; 74a-b; 102) du moyen d'actionnement (28) et le réseau d'une seule rangée (14), dans lequel le premier actionneur (56; 56'a-b; 57a-b; 66a-f; 72a-b; 74a-b; 102) est conçu pour modifier une distance (46) entre le capteur d'image (12) et le réseau d'une seule rangée (14).

7. Dispositif d'imagerie à ouvertures multiples selon l'une des revendications précédentes, dans lequel le moyen d'actionnement (28) comporte un moteur à bobine en mouvement (66a-f; 72a-b) qui est conçu pour modifier une position relative du capteur d'image (12) par rapport au réseau d'une seule rangée (14) dans un plan (25) perpendiculaire à une direction d'extension de rangée (24) du réseau d'une seule rangée (14) et parallèle au capteur d'image (12).

8. Dispositif d'imagerie à ouvertures multiples selon l'une des revendications précédentes, qui est disposé dans un boîtier plat (272), dans lequel au moins une première extension et une deuxième extension du boîtier (272) dans une première direction de boîtier (x) et une deuxième direction de boîtier (z) présente une dimension au moins trois fois plus grande en comparaison avec une troisième extension du boîtier dans une troisième direction de boîtier (y).

9. Dispositif d'imagerie à ouvertures multiples selon l'une des revendications précédentes, dans lequel le moyen d'actionnement (28) comporte un actionneur (56; 56'a-b; 57a-b; 66a-f; 72a-b; 74a-b; 102) qui est conçu pour déplacer le moyen de déviation de faisceau (18) selon un mouvement de rotation (52) du moyen de déviation de faisceau (18) autour d'un axe (32) parallèle à la direction d'extension de rangée (24) du réseau d'une seule rangée (14).

10. Système d'imagerie (272) avec un premier dispositif d'imagerie à ouvertures multiples (10; 40; 140; 150; 160; 170; 180; 200; 220; 250) selon l'une des revendications précédentes et un deuxième dispositif d'imagerie à ouvertures multiples (10; 40; 140; 150; 160; 170; 180; 200; 220; 250) selon l'une des revendications précédentes, dans lequel le système d'imagerie (270) est conçu pour capturer une zone d'objet (260) au moins de manière stéréoscopique.

11. Procédé de fabrication d'un dispositif d'imagerie à ouvertures multiples, aux étapes suivantes consistant à:
prévoir un capteur d'image;
disposer un réseau d'une seule rangée de canaux optiques disposés l'un à côté de l'autre de sorte que chaque canal optique comporte une optique destinée à reproduire une zone partielle d'une zone d'objet sur une zone du capteur d'image, de sorte que le réseau d'une seule rangée (14) présente un support (15) à travers lequel passent les canaux optiques (16a-b);
disposer un moyen de déviation de faisceau destiné à dévier un trajet de faisceau des canaux optiques; et
disposer un moyen d'actionnement destiné à générer un mouvement relatif entre le capteur d'image, le réseau d'une seule rangée et le moyen de déviation de faisceau;
dans lequel le moyen d'actionnement est disposé de sorte qu'il soit disposé au moins partiellement entre deux plans qui sont délimités par les côtés d'un parallélépipède, dans lequel les côtés du parallélépipède sont orientés en parallèle l'un par rapport à l'autre ainsi que dans une direction d'extension de rangée du réseau d'une seule rangée et d'une partie du trajet de faisceau des canaux optiques entre le capteur d'image et le moyen de déviation de faisceau et dont le volume est minimal et comporte néanmoins le capteur d'image, le réseau d'une seule rangée et le moyen de déviation de faisceau;
dans lequel le dispositif d'imagerie à ouvertures multiples présente une direction d'épaisseur (36) qui est disposée de manière perpendiculaire aux deux plans (26a, 26b), et le moyen d'actionnement est disposé de sorte que le moyen d'actionnement (28) présente une dimension (38) parallèle à la direction d'épaisseur (36) et qu'une part (42) de tout au plus 10 % de la dimension (38), partant d'une région (44) entre les deux niveaux (26a, 26b),
s'étende au-delà des deux niveaux (26a, 26b);
de sorte que le moyen d'actionnement comporte un actionneur piézoélectrique (74) réalisé en forme d'actionneur piézoélectrique à flexion qui est couplé au capteur d'image ou au réseau (14); de sorte que le capteur d'image (12) ou le moyen de déviation de faisceau (18) soit disposé entre l'actionneur piézoélectrique du moyen d'actionnement (28) et le réseau d'une seule rangée (14), de sorte que l'actionneur piézoélectrique soit conçu pour modifier une distance (46) entre le capteur d'image (12) et le réseau d'une seule rangée (14) et pour se déformer lors d'un actionnement dans une direction de faisceau parallèle à un trajet de faisceau à travers les canaux optiques; et de sorte que l'actionneur piézoélectrique soit connecté par l'intermédiaire d'un moyen de déviation mécanique (78; 84) au capteur d'image ou au réseau (14), de sorte que le moyen de déviation mécanique (78; 84) soit disposé entre les plans (26a-b); de sorte que le moyen de déviation mécanique (78; 84) ou le réseau d'une seule rangée (14) ou le capteur d'image soit monté par l'intermédiaire d'un support (82) qui est conçu pour limiter les degrés de liberté de mouvement du réseau d'une seule rangée (14) ou du capteur d'image par une déviation de l'actionneur (74) dans une direction (64) parallèle ou antiparallèle à la direction de faisceau.
